# EUROPÄISCHE PATENTSCHRIFT

(11) **EP 2 581 126 B1**
(45) Veröffentlichungstag und Bekanntmachung des Hinweises auf die Patenterteilung: **14.11.2018**
(21) Anmeldenummer: 13150714.7
(22) Anmeldetag: 04.07.2008
(51) Int. Cl.: B05B 14/43, B05B 14/40

(54) **Vorrichtung und Verfahren zum Abtrennen von Nasslack-Overspray**
Device and method for separating liquid coating overspray
Dispositif et procédé de séparation de pulvérisations de laque mouillée

(30) Priorität: 24.08.2007 DE 102007040901
(43) Veröffentlichungstag der Anmeldung: 17.04.2013
(62) Teilanmeldung aus: 11155368.1
(73) Patentinhaber: Dürr Systems AG, 74321 Bietigheim-Bissingen (DE)
(72) Erfinder: Holzheimer, Jens, 71732 Tamm (DE); Wieland, Dietmar, 71336 Waiblingen (DE)
(74) Vertreter: Hoeger, Stellrecht & Partner Patentanwälte mbB

(56) Entgegenhaltungen:
- DE-A1- 4 211 465
- DE-A1- 10 361 266
- DE-A1- 19 938 772
- DE-A1-102005 048 579
- JP-A- 2005 028 294
- US-A- 5 198 002

## Beschreibung

Die vorliegende Erfindung betrifft eine Vorrichtung zum Abtrennen von Nasslack-Overspray aus einem Overspray-Partikel enthaltenden Rohgasstrom in einer Beschichtungsanlage, umfassend mindestens eine Filtervorrichtung zum Abtrennen von Nasslack-Overspray aus dem Overspray-Partikel enthaltenden Rohgasstrom, welche mindestens ein Filterelement zum Abtrennen des Oversprays aus dem Rohgasstrom und mindestens einen Hilfsmaterialaufnahmebehälter zum Aufnehmen eines Filterhilfsmaterials, das in den Rohgasstrom zugegeben wird, wobei das Filterhilfsmaterial partikelförmig ist, umfasst, und eine Strömungskammer, durch welche der Rohgasstrom von einem Applikationsbereich einer Lackieranlage zu einer Einlassöffnung der mindestens einen Filtervorrichtung strömt.

Eine solche Vorrichtung ist beispielsweise aus der DE 10 2005 048 579 A1 bekannt.

Bei dieser bekannten Vorrichtung erfolgt die trockene Abtrennung des Nasslack-Oversprays aus dem Rohgasstrom einer Spritzkabine in der Filtervorrichtung, nachdem mit einer Düsenanordnung zuvor ein fließfähiges, partikelförmiges, als "Precoat"-Material bezeichnetes Filterhilfsmaterial in den Rohgasstrom abgegeben wurde.

Dieses Hilfsmaterial dient dazu, sich als Sperrschicht an den Oberflächen des Filterelements abzusetzen, um zu verhindern, dass diese Flächen durch anhaftende Overspray-Partikel verkleben. Durch periodisches Abreinigen der Filterelemente der Filtervorrichtung gelangt das Gemisch aus Hilfsmaterial und Nasslack-Overspray von den Filterelementen in einen Hilfsmaterialaufnahmebehälter, aus dem es abgesaugt werden kann, um der Düsenanordnung für eine erneute Verwendung als Hilfsmaterial zugeführt zu werden. Ferner kann das im Hilfsmaterialaufnahmebehälter befindliche Gemisch aus Hilfsmaterial und Nasslack-Overspray mittels Druckluftpulsen aus einer Druckluftlanze aufgewirbelt werden, um so aus dem Hilfsmaterialaufnahmebehälter zu den Filterelementen aufzusteigen und sich dort abzusetzen.

Um zu verhindern, dass während der Abgabe von Hilfsmaterial in den Rohgasstrom aus der Düsenanordnung Hilfsmaterial in den Applikationsbereich der Lackieranlage gelangt, sind bei dieser bekannten Vorrichtung Verschließvorrichtungen vorgesehen, mittels welcher der Strömungsweg des Rohgasstroms von dem Applikationsbereich zu den Filtervorrichtungen zeitweise verschlossen wird. Das aus den Hilfsmaterialaufnahmebehältern aufgewirbelte Hilfsmaterial reicht nicht aus, um eine ausreichende Schutzschicht auf den Filterelementen zu erzeugen. Außerdem kann frisches Hilfsmaterial nur durch die Düsenanordnung in den Rohgasstrom eingebracht werden.

Die DE 10 2005 048579 A1, die DE 103 61 266 A1 und die DE 42 11 465 A1 offenbaren Vorrichtungen gemäß dem Oberbegriff von Anspruch 1.

Die JP 2005 028294 A offenbart eine Vorrichtung zur Behandlung von saurem Rauchgas, wobei ein Filtermaterial mit einer Beschichtung versehen ist, die eine alkalische Verbindung in einem Anteil von mindestens 50 Gewichtsprozent und ein Hilfsmaterial enthält, wobei das Hilfsmaterial einen Zeolith enthalten kann.

Der vorliegenden Erfindung liegt die Aufgabe zugrunde, eine Vorrichtung der eingangs genannten Art zu schaffen, welche es ermöglicht, das mindestens eine Filterelement in einfacher und effizienter Weise mit einem Hilfsmaterial zu beaufschlagen, welches den Nasslack-Overspray gut aufnimmt und/oder bindet.

Diese Aufgabe wird durch eine Vorrichtung nach Anspruch 1 gelöst.

Besondere Ausgestaltungen der erfindungsgemäßen Filtervorrichtung sind Gegenstand der Ansprüche 2 und 3.

Wenn der Rohgasstrom direkt in den Hilfsmaterialaufnahmebehälter gelenkt wird, wird erreicht, dass eine ausreichende Menge Hilfsmaterial in den Rohgasstrom zugegeben wird.

Wenn der Rohgasstrom durch die Einlassöffnung in eine im übrigen gegenüber dem vor der Einlassöffnung liegenden Strömungsweg des Rohgasstroms und gegenüber dem Applikationsbereich der Lackieranlage abgeschlossene Filtervorrichtung eintritt, ist ferner gewährleistet, dass kein Hilfsmaterial aus dem Hilfsmaterialaufnahmebehälter in den vor der Einlassöffnung liegenden Strömungsweg des Rohgasstroms oder in den Applikationsbereich gelangt, da sich dieses Hilfsmaterial hierzu entgegen der Strömungsrichtung des Rohgasstroms durch die Einlassöffnung bewegen müsste.

Bei Verwendung einer besonderen Ausgestaltung der erfindungsgemäßen Filtervorrichtung kann auf eine zusätzliche Düsenanordnung zum Einbringen von Hilfsmaterial in den Rohgasstrom verzichtet werden.

Ferner ist es bei Verwendung einer besonderen Ausgestaltung der erfindungsgemäßen Filtervorrichtung nicht erforderlich, Teile des Strömungswegs des Rohgasstroms vom Applikationsbereich zu der Filtervorrichtung während der Zugabe von Hilfsmaterial in den Rohgasstrom zeitweise zu verschließen.

Vorzugsweise wird das Hilfsmaterial ausschließlich innerhalb der Filtervorrichtung, nachdem der Rohgasstrom die Einlassöffnung der Filtervorrichtung passiert hat, in den Rohgasstrom eingebracht.

Um die Strömungsrichtung des Rohgasstroms möglichst präzise ausrichten zu können, ist vorzugsweise vorgesehen, dass die Einlassöffnung als ein sich in der Strömungsrichtung des Rohgasstroms erstreckender Einlasskanal ausgebildet ist.

Um die maximale Strömungsgeschwindigkeit des Rohgasstroms in dem Einlasskanal zu erhöhen, kann vorgesehen sein, dass der Einlasskanal einen sich in der Strömungsrichtung des Rohgasstroms bis zu einer Engstelle hin verengenden durchströmbaren Querschnitt aufweist.

Um die Strömungsgeschwindigkeit des Rohgasstroms nach dem Passieren einer Engstelle, an welcher der Rohgasstrom seine maximale Strömungsgeschwindigkeit aufweist, wieder abzusenken und so zu verhindern, dass der Rohgasstrom mit einer zu hohen Strömungsgeschwindigkeit auf das Hilfsmaterial in dem Hilfsmaterialaufnahmebehälter trifft, kann vorgesehen sein, dass der Einlasskanal einen sich in der Strömungsrichtung des Rohgasstroms von einer Engstelle aus erweiternden durchströmbaren Querschnitt aufweist.

Bei einer bevorzugten Ausgestaltung der Erfindung ist die Einlassöffnung nach unten durch eine untere Leitfläche begrenzt.

Für die angestrebte Lenkung des Rohgasstroms in den Hilfsmaterialaufnahmebehälter hinein ist es günstig, wenn die untere Leitfläche zumindest abschnittsweise gegen die Horizontale geneigt ist, und zwar insbesondere so, dass die untere Leitfläche - in der Strömungsrichtung des Rohgasstroms gesehen - nach unten geneigt ist.

Als besonders günstig hat es sich erwiesen, wenn die untere Leitfläche zumindest abschnittsweise unter einem Winkel von mindestens ungefähr 30°, vorzugsweise unter einem Winkel von mindestens ungefähr 40°, gegen die Horizontale geneigt ist.

Ferner hat es sich als günstig erwiesen, wenn die untere Leitfläche zumindest abschnittsweise unter einem Winkel von höchstens ungefähr 75°, vorzugsweise von höchstens ungefähr 65°, gegen die Horizontale geneigt ist.

Um ein Abreißen der Rohgasströmung an der unteren Leitfläche zu verhindern und eine gerichtete Strömung in den Hilfsmaterialaufnahmebehälter zu gewährleisten, ist es von Vorteil, wenn die untere Leitfläche einen oberen Abschnitt und einen in der Strömungsrichtung des Rohgasstroms auf den oberen Abschnitt folgenden unteren Abschnitt aufweist, wobei der untere Abschnitt stärker gegenüber der Horizontalen geneigt ist als der obere Abschnitt.

Ferner ist es zur Lenkung der Rohgasströmung günstig, wenn die Einlassöffnung nach oben durch eine obere Leitfläche begrenzt ist.

Auch die obere Leitfläche ist vorzugsweise zumindest abschnittsweise gegen die Horizontale geneigt, und zwar insbesondere derart, dass die obere Leitfläche - in der Strömungsrichtung des Rohgasstroms gesehen - nach unten geneigt ist.

Dabei hat es sich als günstig erwiesen, wenn die obere Leitfläche zumindest abschnittsweise unter einem Winkel von mindestens ungefähr 30°, vorzugsweise unter einem Winkel von mindestens ungefähr 40°, gegen die Horizontale geneigt ist.

Außerdem hat es sich als günstig erwiesen, wenn die obere Leitfläche zumindest abschnittsweise unter einem Winkel von höchstens ungefähr 75°, vorzugsweise unter einem Winkel von höchstens ungefähr 65°, gegen die Horizontale geneigt ist.

Die mittlere Strömungsgeschwindigkeit des Rohgasstroms beim Passieren der engsten Stelle der Einlassöffnung sollte ausreichend hoch sein, um ein Ausströmen von Hilfsmaterial oder von von dem mindestens einen Filterelement abgereinigtem Nasslack-Overspray durch die Einlassöffnung zu verhindern.

Vorzugsweise beträgt die mittlere Strömungsgeschwindigkeit des Rohgasstroms beim Passieren der engsten Stelle der Einlassöffnung mindestens ungefähr 2 m/s, insbesondere mindestens 3 m/s.

Ferner hat es sich als günstig erwiesen, wenn die mittlere Strömungsgeschwindigkeit des Rohgasstroms beim Passieren der engsten Stelle der Einlassöffnung höchstens ungefähr 8 m/s, vorzugsweise höchstens ungefähr 5 m/s beträgt.

Um eine gut ausgerichtete Strömung des Rohgases in den Hilfsmaterialaufnahmebehälter zu erreichen, ist die Einlassöffnung vorzugsweise so ausgebildet, dass die Strömung des Rohgases im Bereich der Einlassöffnung nicht abreißt. Um zu erreichen, dass der mit Overspray beladene Rohgasstrom vor dem Erreichen des mindestens einen Filterelements möglichst wenig mit Bauteilen der Filtervorrichtung in Kontakt kommt, an denen sich der Overspray absetzen könnte, ist es von Vorteil, wenn der Hilfsmaterialaufnahmebehälter so ausgebildet und relativ zu der Einlassöffnung angeordnet ist, dass der aus der Einlassöffnung austretende Rohgasstrom in dem Hilfsmaterialaufnahmebehälter zu dem mindestens einen Filterelement hin umgelenkt wird.

Um zu erreichen, dass möglichst wenig Hilfsmaterial in den Bereich der Einlassöffnung der Filtervorrichtung gelangt, ist es günstig, wenn die Filtervorrichtung mindestens ein Rückhalteelement umfasst, welches Hilfsmaterial aus dem Hilfsmaterialaufnahmebehälter von der Einlassöffnung fernhält.

Ein solches Rückhalteelement ist besonders wirksam, wenn es in einen Innenraum der Filtervorrichtung und/oder in einen Innenraum des Hilfsmaterialaufnahmebehälters hineinragt.

Bei einer bevorzugten Ausgestaltung der Erfindung ist vorgesehen, dass das Rückhalteelement, das beispielsweise als ein Rückhalteblech ausgebildet sein kann, eine untere Begrenzung der Einlassöffnung bildet.

In diesem Fall kann insbesondere vorgesehen sein, dass das Rückhalteelement einen Abschnitt einer Leitfläche für den Rohgasstrom aufweist, welcher stärker gegenüber der Horizontalen geneigt ist als ein in der Strömungsrichtung des Rohgasstroms vor dem an dem Rückhalteelement angeordneten Abschnitt der Leitfläche angeordneter weiterer Abschnitt der Leitfläche. Hierdurch wird ein Abreißen der Rohgasströmung an der Leitfläche wirksam verhindert.

Um zu erreichen, dass möglichst der gesamte in die Filtervorrichtung eintretende Rohgasstrom zunächst direkt in den Hilfsmaterialaufnahmebehälter und erst dann, mit Hilfsmaterial beladen, zu dem mindestens einen Filterelement gelangt, ist es von Vorteil, wenn die Filtervorrichtung mindestens ein Filterabschirmelement umfasst, welches so ausgebildet und angeordnet ist, dass es verhindert, dass das in die Filtervorrichtung eintretende Rohgas von der Einlassöffnung direkt zu dem mindestens einen Filterelement strömt.

Ein solches Filterabschirmelement kann insbesondere als ein Abschirmblech ausgebildet sein.

Um möglichst zu verhindern, dass von dem mindestens einen Filterelement abgereinigtes Material (Hilfsmaterial und Nasslack-Overspray) in den Bereich der Einlassöffnung der Filtervorrichtung gelangt, ist es von Vorteil, wenn die Filtervorrichtung mindestens ein Abweiselement umfasst, welches von dem mindestens einen Filterelement abgereinigtes Material von der Einlassöffnung des Rohgases fernhält.

Vorzugsweise lenkt das mindestens eine Abweiselement das von dem mindestens einen Filterelement abgereinigte Material in den Hilfsmaterialaufnahmebehälter.

Ein solches Abweiselement kann insbesondere als ein Abweisblech ausgebildet sein.

Um zu verhindern, dass sich Hilfsmaterial und/oder Overspray im Bereich der Einlassöffnung ablagert, ist es von Vorteil, wenn die Filtervorrichtung mindestens ein Abdeckelement umfasst, das einen Eckbereich der Einlassöffnung abdeckt, so dass Hilfsmaterial und/oder Overspray von dem Eckbereich der Einlassöffnung ferngehalten wird.

Ein solches Abdeckelement kann ferner insbesondere eine im wesentlichen dreieckige Abdeckfläche aufweisen.

Ein solches Abdeckelement kann insbesondere als ein Abdeckblech ausgebildet sein.

Alternativ oder ergänzend zum Vorsehen eines solchen Abdeckelements kann vorgesehen sein, dass die Einlassöffnung an mindestens einem Eckbereich eine Eckfläche aufweist, welche schräg zur Vertikalen und schräg zur Horizontalen ausgerichtet ist, so dass Hilfsmaterial und/oder Overspray durch die Neigung der Eckfläche an der Eckfläche nach unten abrutscht.

Eine solche Eckfläche kann insbesondere an einem im Eckbereich der Einlassöffnung vorgesehenen Abdeckelement vorgesehen sein.

Um die vom Rohgasstrom beim Durchströmen des Hilfsmaterialaufnahmebehälters aufgenommene Hilfsmaterialmenge zu erhöhen, kann die Filtervorrichtung mindestens eine Aufwirbelungseinrichtung zum Aufwirbeln von in dem Hilfsmaterialaufnahmebehälter befindlichem Hilfsmaterial umfassen.

Vorzugsweise nimmt der von dem Rohgasstrom durchströmbare Querschnitt der Strömungskammer längs der Strömungsrichtung des Rohgasstroms bis zu der mindestens einen Einlassöffnung der mindestens einen Filtervorrichtung ab. Hierdurch nimmt die Strömungsgeschwindigkeit des Rohgasstroms beim Durchströmen der Strömungskammer bis zu der mindestens einen Einlassöffnung der mindestens einen Filtervorrichtung zu, was verhindert, dass Hilfsmaterial und/oder Overspray aus der Filtervorrichtung entgegen der Strömungsrichtung des Rohgasstroms zu dem Applikationsbereich der Lackieranlage gelangt.

Insbesondere kann vorgesehen sein, dass die Strömungskammer durch mindestens eine im wesentlichen horizontale Begrenzungswand begrenzt ist, durch welche der von dem Rohgasstrom durchströmbare Querschnitt der Strömungskammer sprunghaft abnimmt.

Um zu verhindern, dass beispielsweise durch Schlauchplatzer im Applikationsbereich austretender Nasslack oder Löschwasser in den Strömungsweg des Rohgasstroms und von dort in die Filtervorrichtung gelangen, ist es von Vorteil, wenn die Vorrichtung mindestens ein Strömungsleitblech umfasst, das über mindestens einer Filtervorrichtung angeordnet ist und so unter einem Winkel von höchstens ungefähr 10°, vorzugsweise unter einem Winkel von höchstens ungefähr 3°, gegen die Horizontale geneigt ist, dass auf das Strömungsleitblech gelangende Flüssigkeit nicht in den Strömungsweg des Rohgasstroms gelangt.

Wenn die Vorrichtung mindestens einen durch eine Bedienungsperson begehbaren Steg umfasst, so ist dessen Oberseite vorzugsweise zumindest abschnittsweise so unter einem Winkel von höchstens ungefähr 10°, vorzugsweise unter einem Winkel von höchstens ungefähr 3°, gegen die Horizontale geneigt, dass auf den begehbaren Steg gelangende Flüssigkeit nicht in den Strömungsweg des Rohgasstroms gelangt. Auch dies dient dazu, beispielsweise aufgrund von Schlauchplatzern im Applikationsbereich austretenden Nasslack oder Löschwasser aus dem Strömungsweg des Rohgasstroms durch die Strömungskammer herauszuhalten.

Die erfindungsgemäße Vorrichtung zum Abtrennen von Nasslack-Overspray eignet sich insbesondere zur Verwendung in einer Anlage zum Lackieren von Gegenständen, insbesondere von Fahrzeugkarosserien, die mindestens einen Applikationsbereich zum Applizieren von Nasslack auf die zu lackierenden Gegenstände und mindestens eine erfindungsgemäße Vorrichtung zum Abtrennen von Nasslack-Overspray umfasst.

Dabei hat es sich als günstig erwiesen, wenn der vertikale Abstand des Applikationsbereichs von der Einlassöffnung der Filtervorrichtung mindestens ungefähr 1,0 m, vorzugsweise mindestens ungefähr 1,5 m, beträgt.

Die vorliegende Erfindung betrifft ferner ein Verfahren zum Abtrennen von Nasslack-Overspray aus einem Overspray-Partikel enthaltenden Rohgasstrom, welches folgende Verfahrensschritte umfasst:
- Einleiten des Rohgasstroms in eine Filtervorrichtung; und
- Abtrennen des Oversprays aus dem Rohgasstrom mittels mindestens eines in der Filtervorrichtung angeordneten Filterelements.

Der vorliegenden Erfindung liegt die Aufgabe zugrunde, ein solches Verfahren zu schaffen, bei welchem das mindestens eine Filterelement in einfacher und effizienter Weise mit einem Hilfsmaterial beaufschlagt wird, welches den Nasslack-Overspray gut aufnimmt und/oder bindet.

Diese Aufgabe wird durch ein Verfahren nach Anspruch 5 gelöst.

Besondere Ausgestaltungen des erfindungsgemäßen Verfahrens sind Gegenstand der Ansprüche 6 und 7.

Die vorliegende Erfindung kann den Vorteil bieten, dass so wenig Overspray wie möglich an den Wänden der Strömungskammer oder an den Wänden der Filtervorrichtung auf dem Weg zu dem mindestens einen Filterelement kleben bleibt.

Das mindestens eine Filterelement ist vorzugsweise in einer weitestgehend geschlossenen Box untergebracht, so dass kein Hilfsmaterial oder von dem Filterelement abgereinigter Overspray in den Applikationsbereich gelangt, ohne dass hierfür Teile des Strömungswegs des Rohgasstroms zeitweise abgesperrt werden müssen.

Die Luftströmung innerhalb der Filtervorrichtung ist so gestaltet, dass eine möglichst homogene Verteilung des Hilfsmaterials an dem Filterelement oder an den Filterelementen erfolgt.

Die Kapazität der erfindungsgemäßen Filtervorrichtung kann auf die den Applikationsbereich durchsetzende Rohgasmenge abgestimmt werden.

Die vorliegende Erfindung eignet sich insbesondere zur Verwendung in trockenen Nasslack-Overspray-Abscheidungssystemen für Lackierkabinen in der Automobilindustrie oder im allgemeinen Industrie-Lackieranlagenbereich.

Die vorliegende Erfindung ermöglicht eine Beaufschlagung des Rohgasstroms mit Hilfsmaterial und eine Abreinigung der Filterelemente während des laufenden Lackierprozesses.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer Lackierkabine mit einer darunter angeordneten Vorrichtung zum Abtrennen von Nasslack-Overspray aus einem Overspray-Partikel enthaltenden Rohgasstrom, welche eine unter der Lackierkabine angeordnete Strömungskammer und auf beiden Seiten der Strömungskammer jeweils drei Filtermodule umfasst;
- Fig. 2: einen schematischen vertikalen Querschnitt durch die Anlage aus Fig. 1;
- Fig. 3: einen der Fig. 2 entsprechenden schematischen vertikalen Querschnitt durch die Anlage aus Fig. 1, wobei zusätzlich die jeweilige Strömungsrichtung des Rohgases, der aus den Filtermodulen austretenden Abluft und der zur Erzeugung von Querluftschleiern in die Strömungskammer eingespeisten Zuluft durch Pfeile angezeigt sind;
- Fig. 4: eine schematische Draufsicht von oben auf die Anlage aus den Fig. 1 bis 3;
- Fig. 5: eine schematische Seitenansicht der Anlage aus den Fig. 1 bis 4;
- Fig. 6: eine schematische perspektivische Darstellung der Vorrichtung zum Abtrennen von Nasslack-Overspray aus einem Overspray-Partikel enthaltenden Rohgasstrom, welche unter der Lackierkabine der Anlage aus den Fig. 1 bis 5 angeordnet ist und welche die Strömungskammer in entlang der Längsrichtung der Strömungskammer aufeinanderfolgende Abschnitte unterteilende Quertrennwände aufweist;
- Fig. 7: eine schematische perspektivische Darstellung eines einzelnen Filtermoduls, das zur Anordnung zwischen zwei benachbarten weiteren Filtermodulen vorgesehen ist (Mittelmodul);
- Fig. 8: eine schematische perspektivische Darstellung eines einzelnen Filtermoduls, das zur Anordnung neben einem weiteren Filtermodul vorgesehen ist und auf der gegenüberliegenden Seite ein Ende einer Filtermodul-Reihe bildet (Eckmodul);
- Fig. 9: einen schematischen vertikalen Querschnitt durch ein Filtermodul;
- Fig. 10: einen schematischen vertikalen Querschnitt durch ein Filtermodul und den angrenzenden Bereich der Strömungskammer, in welchem die jeweilige lokale Strömungsrichtung des Rohgasstroms durch Pfeile angezeigt ist;
- Fig. 11: eine schematische perspektivische Darstellung eines Randbereichs einer Einlassöffnung eines Filtermoduls;
- Fig. 12: eine schematische Vorderansicht eines Filtermoduls;
- Fig. 13: einen schematischen vertikalen Schnitt durch einen Hilfsmaterialaufnahmebehälter mit im Inneren des Behälters angeordnetem Füllstandssensor und Aufwirbelungseinrichtung;
- Fig. 14: eine schematische Seitenansicht einer Revisionstür des Hilfsmaterialaufnahmebehälters aus Fig. 13, mit an der Revisionstür gehaltenem Füllstandssensor und Aufwirbelungseinrichtung;
- Fig. 15: eine schematische Draufsicht auf die Außenseite der Revisionstür aus Fig. 14;
- Fig. 16: eine schematische Draufsicht von oben auf ein in dem Hilfsmaterialaufnahmebehälter aus Fig. 13 angeordnetes Auffanggitter;
- Fig. 17: eine schematische Darstellung einer Vorrichtung zum Zuführen von frischem Hilfsmaterial aus einem Vorlagebehälter zu in ihrer Arbeitsposition befindlichen Hilfsmaterialaufnahmebehältern der in Fig. 13 dargestellten Art;
- Fig. 18: eine schematische Darstellung einer Abführvorrichtung zum Abführen von mit Overspray vermischtem Hilfsmaterial aus den Hilfsmaterialaufnahmebehältern zu einem Sammelbehälter;
- Fig. 19: eine schematische Darstellung eines Filtermoduls und einer stromabwärts des Filtermoduls angeordneten Abluftleitung mit Gebläse sowie verschiedener Vorrichtungen zur Überwachung des Betriebszustands des Gebläses und einer Vorrichtung zum Zuführen von Druckluft zu den Filterelementen, zu einer Aufwirbelungseinheit und zu einem Fluidboden des Filtermoduls;
- Fig. 20: einen schematischen vertikalen Querschnitt durch eine zweite Ausführungsform einer Vorrichtung zum Abtrennen von NasslackOverspray aus einem Overspray-Partikel enthaltenden Abluftstrom, welche geneigte Strömungsleitbleche zum Leiten eines Querluftstroms und einen begehbaren Steg mit geneigter Oberseite zwischen den Filtermodulen umfasst;
- Fig. 21: einen schematischen vertikalen Querschnitt durch eine alternative Ausführungsform eines Hilfsmaterialaufnahmebehälters, welcher mit einem pneumatisch betriebenen Rührwerk zum Durchmischen des im Hilfsmaterialaufnahmebehälter befindlichen Materials und zum Vergleichmäßigen der Vorlage versehen ist;
- Fig. 22: eine schematische Draufsicht von oben auf den Hilfsmaterialaufnahmebehälter mit pneumatisch betriebenem Rührwerk aus Fig. 21;
- Fig. 23: einen schematischen vertikalen Schnitt durch eine weitere alternative Ausführungsform eines Hilfsmaterialaufnahmebehälters, der mit einer elektrisch betriebenen Welle und Paddeln zum Durchmischen des im Hilfsmaterialaufnahmebehälter befindlichen Materials und zum Vergleichmäßigen der Vorlage versehen ist; und
- Fig. 24: eine schematische Draufsicht von oben auf den Hilfsmaterialaufnahmebehälter mit elektrisch betriebener Welle aus Fig. 23.

Gleiche oder funktional äquivalente Elemente sind in allen Figuren mit denselben Bezugszeichen bezeichnet.

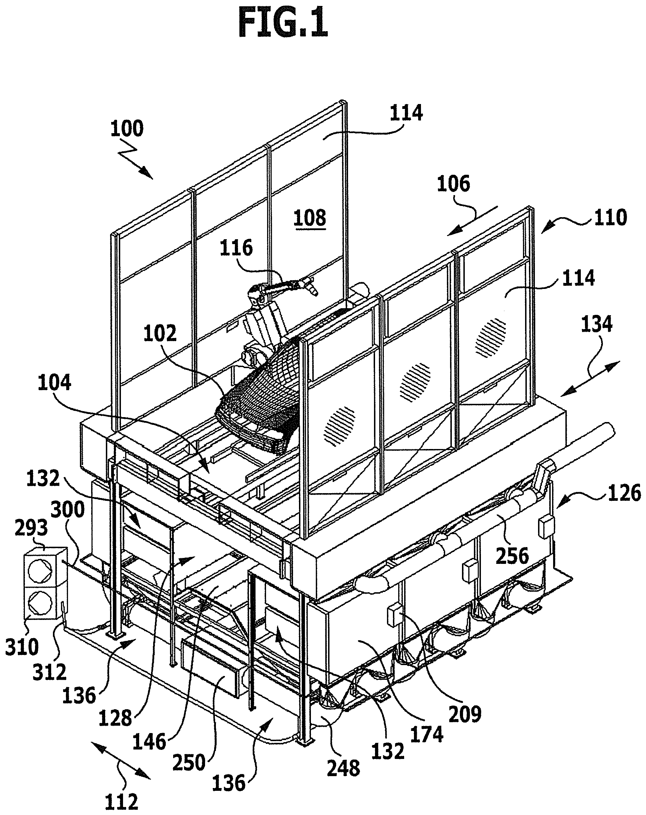

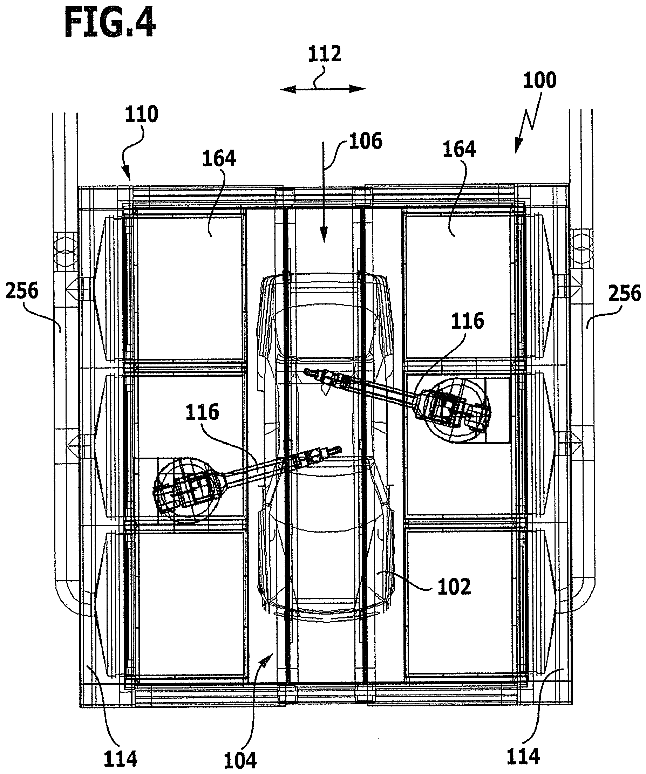

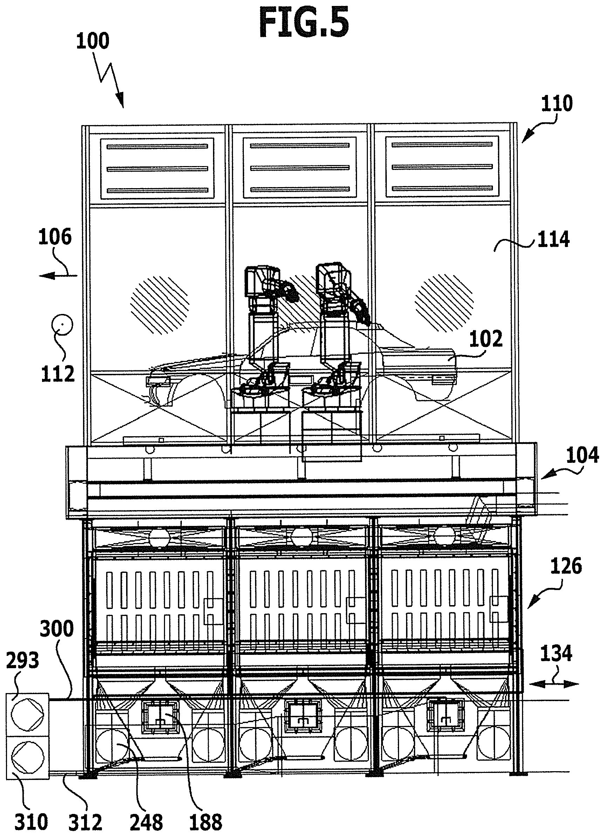

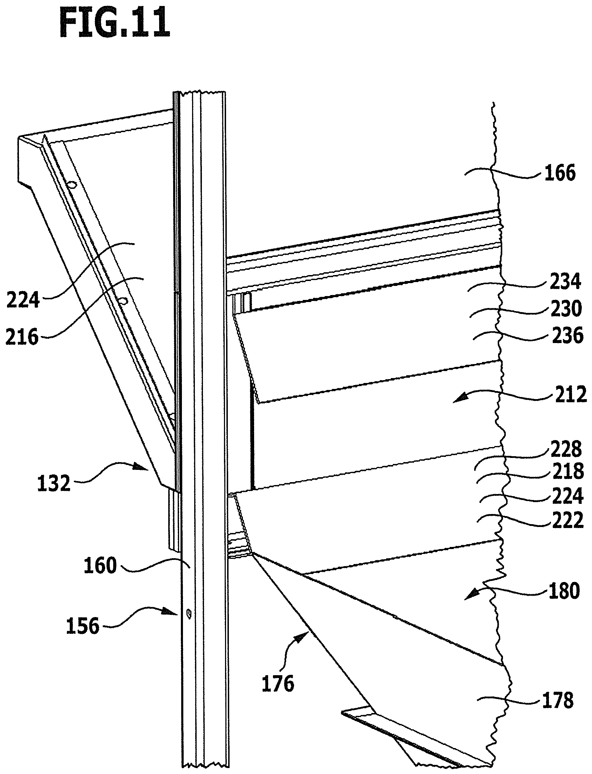

Eine in den Fig. 1 bis 19 dargestellte, als Ganzes mit 100 bezeichnete Anlage zum Spritzlackieren von Fahrzeugkarosserien 102 umfasst eine rein schematisch dargestellte Fördervorrichtung 104, mittels welcher die Fahrzeugkarosserien 102 längs einer Förderrichtung 106 durch einen Applikationsbereich 108 einer als Ganzes mit 110 bezeichneten Lackierkabine bewegt werden können.

Der Applikationsbereich 108 ist der Innenraum der Lackierkabine 110, welche in einer senkrecht zur Förderrichtung 106, die der Längsrichtung der Lackierkabine 110 entspricht, verlaufenden horizontalen Querrichtung 112 zu beiden Seiten der Fördervorrichtung 104 durch jeweils eine Kabinenwand 114 begrenzt ist.

Zu beiden Seiten der Fördervorrichtung 104 sind in der Lackierkabine 110 Spritzlackiereinrichtungen 116, beispielsweise in Form von Lackierrobotern, angeordnet.

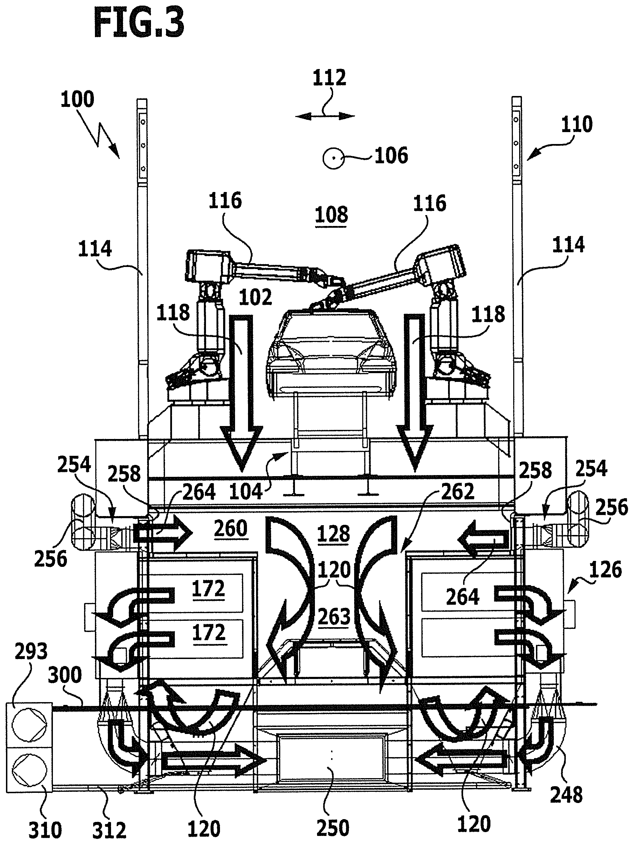

Mittels eines (nur ausschnittsweise dargestellten) Umluftkreislaufs wird ein Luftstrom erzeugt, welcher den Applikationsbereich 108 im wesentlichen vertikal von oben nach unten durchsetzt, wie dies in Fig. 3 durch die Pfeile 118 angedeutet ist.

Dieser Luftstrom nimmt im Applikationsbereich 108 Lack-Overspray in Form von Overspray-Partikeln auf. Der Begriff "Partikel" umfasst dabei sowohl feste als auch flüssige Teilchen, insbesondere Tröpfchen.

Bei Verwendung von Nasslack besteht der Nasslack-Overspray aus Lacktröpfchen. Die meisten der Overspray-Partikel weisen eine größte Abmessung im Bereich von ungefähr 1 µm bis ungefähr 100 µm auf.

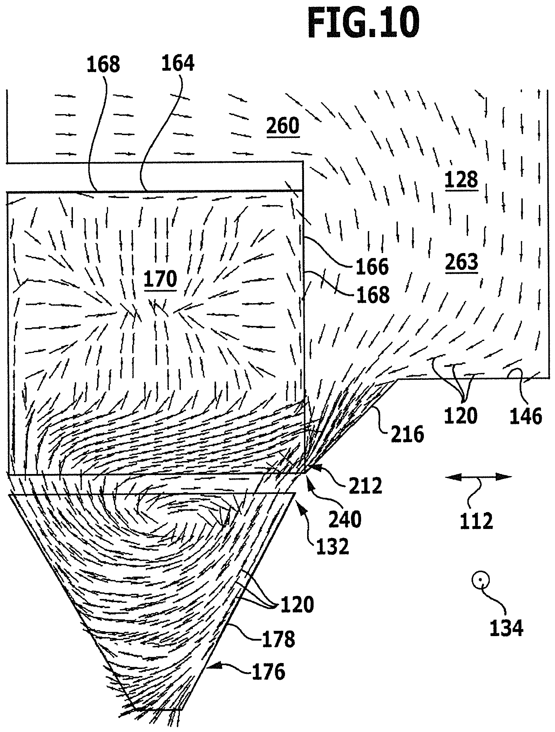

Der mit den Overspray-Partikeln aus dem Applikationsbereich 108 beladene Abluftstrom wird im folgenden als Rohgasstrom bezeichnet. Die Strömungsrichtung des Rohgasstroms ist in den Fig. 3 und 10 durch Pfeile 120 dargestellt.

Der Rohgasstrom verlässt die Lackierkabine 110 nach unten und gelangt in eine als Ganzes mit 126 bezeichnete Vorrichtung zum Abtrennen von Nasslack-Overspray aus dem Rohgasstrom, welche unterhalb des Applikationsbereichs 108 angeordnet ist.

Die Vorrichtung 126 umfasst eine im wesentlichen quaderförmige Strömungskammer 128, welche sich in der Förderrichtung 106 über die ganze Länge der Lackierkabine 110 hinweg erstreckt und in der Querrichtung 112 durch vertikale Seitenwände 130 begrenzt ist, die im wesentlichen mit den seitlichen Kabinenwänden 114 der Lackierkabine 110 fluchten, so dass die Strömungskammer 128 im wesentlichen dieselbe horizontale Querschnittsfläche aufweist wie die Lackierkabine 110 und im wesentlichen vollständig innerhalb der vertikalen Projektion der Grundfläche der Lackierkabine 110 angeordnet ist.

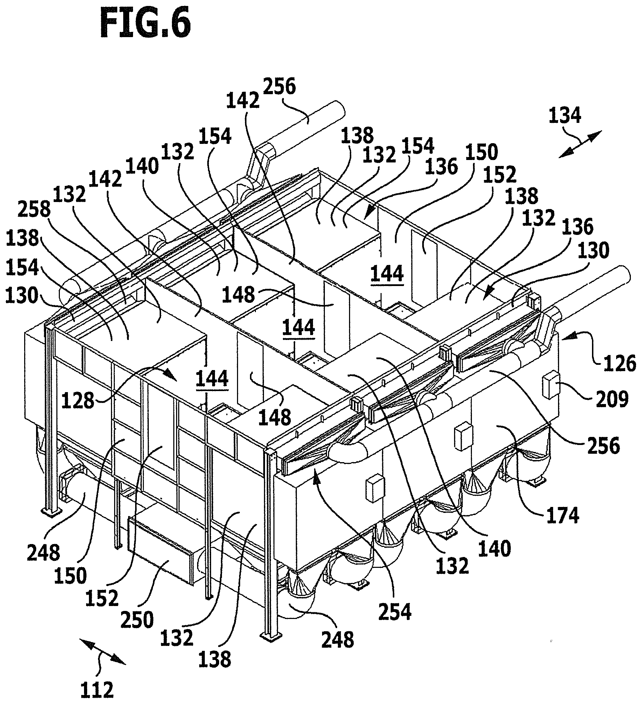

Wie am besten aus Fig. 6 zu ersehen ist, sind auf beiden Seiten der Strömungskammer 128 jeweils mehrere, beispielsweise drei, Filtermodule 132 angeordnet, welche zwei sich in der Längsrichtung 134 (welche mit der Förderrichtung 106 übereinstimmt) der Vorrichtung 126 zum Abtrennen von Nasslack-Overspray erstreckende Modulreihen 136 bilden.

Jede der Modulreihen 136 umfasst zwei Eckmodule 138, welche jeweils ein Ende einer Modulreihe 136 bilden, und mindestens ein zwischen zwei benachbarten Filtermodulen 132 angeordnetes Mittelmodul 140.

Zur Vermeidung von Längsströmungen des Rohgasstroms in der Längsrichtung 134 der Strömungskammer 128 und zur Vermeidung von Strömungen des Rohgases zwischen den einzelnen Filtermodulen 132 können sich in der Querrichtung 112 erstreckende vertikale Quertrennwände 142 vorgesehen sein, welche zwischen jeweils zwei in der Längsrichtung 134 aufeinanderfolgenden Filtermodulen 132 angeordnet sind und die Strömungskammer 128 in längs der Längsrichtung 134 aufeinanderfolgende Strömungskammerabschnitte 144 unterteilen.

Durch diese Quertrennwände 142 ist eine definierte Einstellung der Rohgasströmung für jedes einzelne Filtermodul 132 unabhängig von der Rohgasströmung durch die anderen Filtermodule 132 möglich.

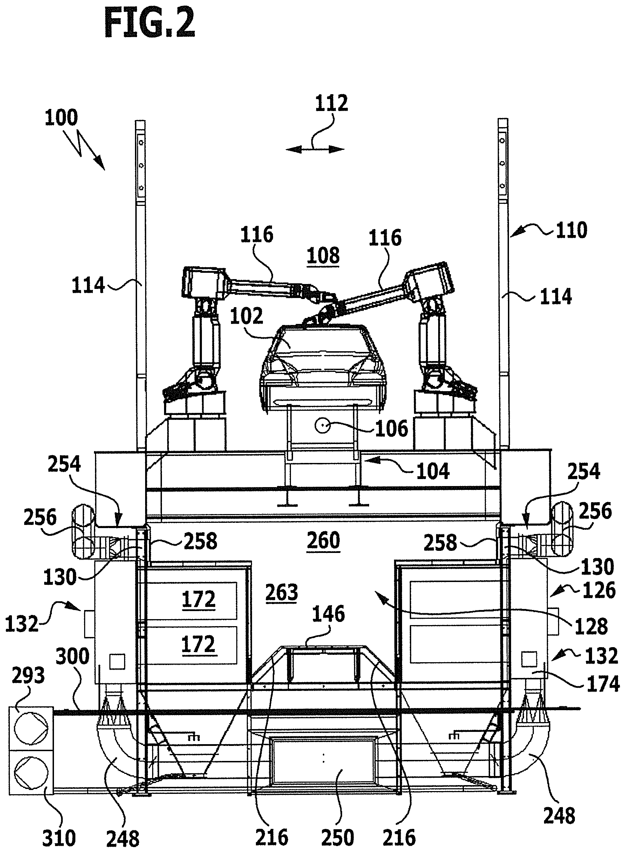

Wie am besten aus Fig. 2 zu ersehen ist, ist zwischen den beiden Modulreihen 136 ein von einer Bedienungsperson begehbarer Steg 146 vorgesehen.

Um die Abschnitte des Stegs 146, welche in den aufeinanderfolgenden Strömungskammerabschnitten 144 angeordnet sind, durchgehend begehen zu können, sind in den Quertrennwänden 142 Durchgangstüren 148 vorgesehen (Fig. 6).

Die die Strömungskammer 128 an ihrem vorderen Ende bzw. an ihrem hinteren Ende abschließenden Stirnwände 150 der Strömungskammer 128 sind mit Zugangstüren 152 versehen, durch welche eine Bedienungsperson von außen in die Strömungskammer 128 gelangen kann.

Jedes der Filtermodule 132 ist als eine vormontierte Einheit 154 ausgebildet, die an einem vom Montageort der Lackieranlage entfernten Ort hergestellt und als Einheit zum Montageort der Lackieranlage transportiert wird. Am Montageort wird die vormontierte Einheit 154 in der vorgesehenen Arbeitsposition angeordnet und mit einer oder mehreren benachbarten vormontierten Einheiten 154 oder mit den dazwischen angeordneten Quertrennwänden 142 sowie mit einer Tragekonstruktion des Applikationsbereichs 108 verbunden.

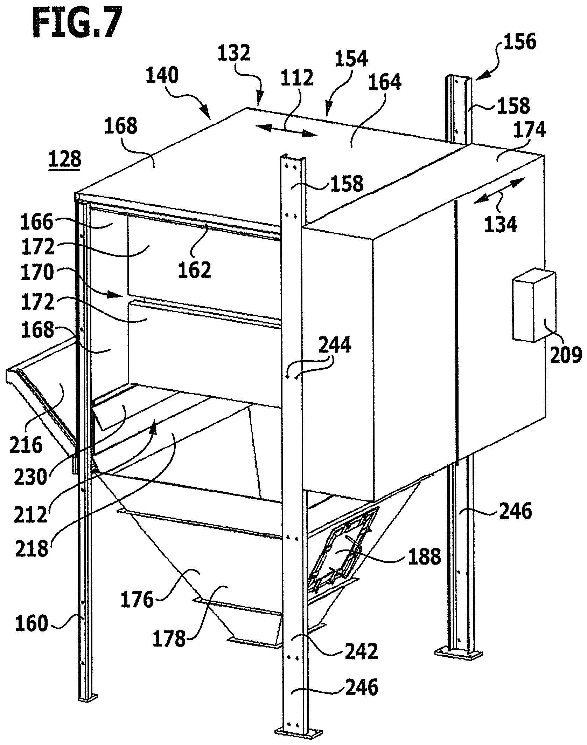

Der Aufbau eines Filtermoduls 132 wird am Beispiel eines Mittelmoduls 140 im folgenden unter Bezugnahme auf die Fig. 7 und 9 bis 16 beschrieben:
Das Modul umfasst eine Tragekonstruktion 156 aus zwei vertikalen hinteren Stützen 158 und zwei vertikalen vorderen Stützen 160, welche an ihrem oberen Ende über horizontale Querstreben 162 mit jeweils einer der hinteren Stützen 158 verbunden sind (Fig. 7).

Ferner sind die vorderen Stützen 160 an ihren oberen Enden mittels einer weiteren (nicht dargestellten) Querstrebe miteinander verbunden.

Auch die hinteren Stützen 158 sind mittels (nicht dargestellter) Querstreben oder mittels eines (nicht dargestellten) Verbindungsrahmens miteinander verbunden.

Die Querstreben am oberen Ende der Tragekonstruktion 156 tragen eine horizontale Deckenwand 164.

An den Vorderseiten der vorderen Stützen 160 ist eine vertikale Vorderwand 166 des Filtermoduls 132 gehalten.

Die Deckenwand 164 und die Vorderwand 166 bilden Trennwände 168 des Filtermoduls 132, welche einen innerhalb des Filtermoduls 132 angeordneten Filterelementaufnahmeraum 170 von dem außerhalb des Filtermoduls 132 befindlichen Bereich der Strömungskammer 128 trennen.

In dem Filterelementaufnahmeraum 170 des Filtermoduls 132 sind mehrere, beispielsweise zehn, Filterelemente 172 in zwei Reihen übereinander angeordnet, welche von einem gemeinsamen Grundkörper 174, der an den Rückseiten der hinteren Stützen 158 gehalten ist, in horizontaler Richtung abstehen.

Die Filterelemente 172 können beispielsweise aus Platten aus gesintertem Polyethylen, die an ihrer Außenfläche mit einer Membran aus Polytetrafluorethylen (PTFE) versehen sind, ausgebildet sein.

Die Beschichtung aus PTFE dient dazu, die Filterklasse der Filterelemente 172 zu erhöhen (d.h. deren Durchlässigkeit zu verringern) und ferner das permanente Anhaften des aus dem Rohgasstrom abgetrennten Nasslack-Oversprays zu verhindern.

Sowohl das Grundmaterial der Filterelemente 172 als auch deren PTFE-Beschichtung weisen eine Porosität auf, so dass das Rohgas durch die Poren in den Innenraum des jeweiligen Filterelements 172 gelangen kann.

Um das Verkleben der Filteroberflächen zu verhindern, sind dieselben ferner mit einer Sperrschicht aus in den Rohgasstrom abgegebenem Hilfsmaterial versehen. Dieses vorzugsweise partikelförmige Hilfsmaterial wird üblicherweise auch als "Precoat"-Material bezeichnet.

Die Sperrschicht bildet sich im Betrieb der Vorrichtung 126 durch Abscheidung des in den Rohgasstrom 120 abgegebenen Hilfsmaterials an den Filteroberflächen und verhindert, dass die Filteroberflächen durch anhaftenden Nasslack-Overspray verkleben.

Hilfsmaterial aus dem Rohgasstrom 120 setzt sich auch an den Innenseiten der Deckenwand 164 und der Vorderwand 166 des Filtermoduls 132 ab, wo es ebenfalls ein Anhaften von Nasslack-Overspray verhindert.

Als Hilfsmaterial kann grundsätzlich jedes Medium verwendet werden, welches dazu in der Lage ist, den Flüssigkeitsanteil des Nasslack-Oversprays aufzunehmen.

Insbesondere kommen als Hilfsmaterialien beispielsweise Kalk, Steinmehl, Aluminiumsilikate, Aluminiumoxide, Siliziumoxide, Pulverlack oder ähnliches in Betracht.

Alternativ oder ergänzend hierzu können als Hilfsmaterial zur Aufnahme und/oder Bindung des Oversprays auch Partikel mit einer Hohlraumstruktur und relativ zu ihren Außenabmessungen großer innerer Oberfläche verwendet werden, beispielsweise Zeolithe oder andere hohle, beispielsweise kugelförmige Körper aus Polymeren, Glas oder Aluminiumsilikat und/oder natürliche oder synthetisch erzeugte Fasern.

Alternativ oder ergänzend hierzu können als Hilfsmaterial zur Aufnahme und/oder Bindung des Oversprays auch chemisch mit dem Overspray reagierende Partikel verwendet werden, beispielsweise chemisch reaktive Partikel aus Amin-, Epoxid-, Carboxyl-, Hydroxyl- oder Isocyanatgruppen, chemisch reaktive Partikel aus mit Octylsilan nachbehandeltem Aluminiumoxid oder feste oder flüssige Mono-, Oligo- oder Polymere, Silane, Silanole oder Siloxane.

Das Hilfsmaterial besteht vorzugsweise aus einer Vielzahl von Hilfsmaterial-Partikeln, welche einen mittleren Durchmesser im Bereich von beispielsweise ungefähr 10 µm bis ungefähr 100 µm aufweisen.

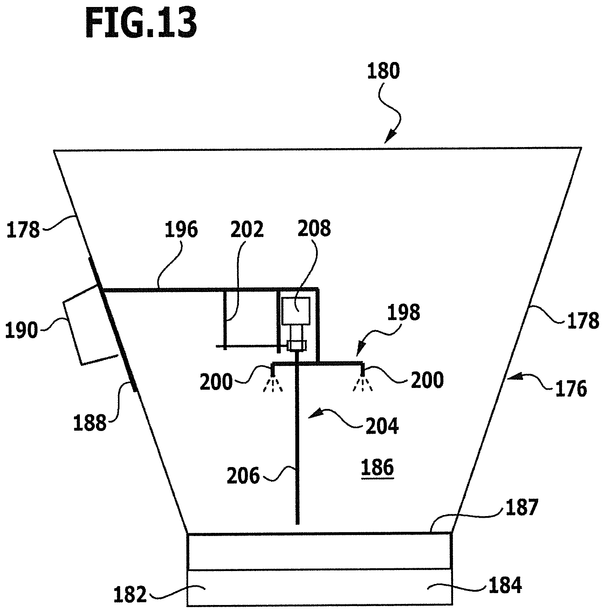

Um das Hilfsmaterial dem Rohgasstrom zugeben zu können, ohne dass die Gefahr besteht, dass das Hilfsmaterial in den Applikationsbereich 108 der Lackieranlage 100 gelangt, ist jedes Filtermodul 132 mit einem an der Tragekonstruktion 156 gehaltenen Hilfsmaterialaufnahmebehälter 176 versehen, welcher beispielsweise eine trichterförmige Gestalt in Form eines umgekehrten Pyramidenstumpfes aufweist (Fig. 13).

Die vier trapezförmigen Seitenwände 178 des Hilfsmaterialaufnahmebehälters 176 sind gegenüber der Vertikalen in einem Winkel von mindestens ungefähr 60° geneigt.

Die Höhe des Hilfsmaterialaufnahmebehälters 176 beträgt beispielsweise ungefähr 1,1 m.

Die oberen Ränder der Seitenwände 178 umschließen eine Zugangsöffnung 180 des Hilfsmaterialaufnahmebehälters 176, durch welche der mit Overspray beladene Rohgasstrom 120 in den Hilfsmaterialaufnahmebehälter 176 eintreten und aus demselben wieder entweichen kann.

Der im wesentlichen horizontal ausgerichtete Boden 182 ist als ein poröser Fluidboden 184 ausgebildet, der mit einem gasförmigen Medium, insbesondere mit Druckluft, durchspülbar ist, um das im Innenraum 186 des Hilfsmaterialaufnahmebehälters 176 angeordnete Hilfsmaterial zu fluidisieren und lokal unterschiedliche Füllhöhen des Hilfsmaterials innerhalb des Hilfsmaterialaufnahmebehälters 176 zu egalisieren.

Während des Betriebs der Anlage 100 wird der Fluidboden intermittierend, beispielsweise dreimal pro Minute für jeweils ungefähr zwei Sekunden, in Betrieb genommen.

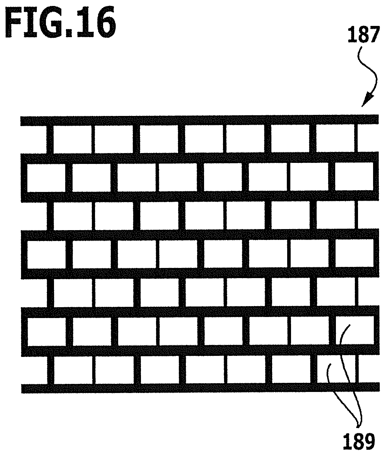

Um zu verhindern, dass der Fluidboden 184 durch herabfallende größere Gegenstände beschädigt wird, ist in einem Abstand von beispielsweise 20 cm über dem Fluidboden 184 ein Auffanggitter oder Rückhaltegitter 187 angeordnet, welches sich in horizontaler Richtung über den gesamten Querschnitt des Innenraums 186 des Hilfsmaterialaufnahmebehälters 176 erstreckt und eine Vielzahl von Reihen waben- oder rechteckförmiger Durchtrittsöffnungen 189 für den Durchtritt von Hilfsmaterial durch das Rückhaltegitter 187 aufweist. Die Durchtrittsöffnungen sind von Reihe zu Reihe versetzt zueinander angeordnet und weisen eine Größe von beispielsweise ungefähr 30 mm x 30 mm auf (Fig. 16).

Um den Zugang zu dem Innenraum 186 des Hilfsmaterialaufnahmebehälters 176 für Wartungszwecke zu ermöglichen, ist eine der Seitenwände 178 mit einer Revisionsöffnung versehen, welche im Betrieb des Filtermoduls 132 durch eine Revisionstür 188 mit einem Handgriff 190 verschlossen ist (siehe die Fig. 13 bis 15).

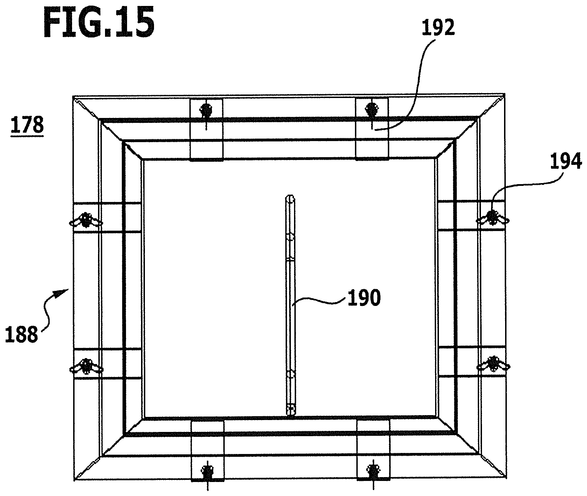

Wie aus Fig. 15 zu ersehen ist, ist die Revisionstür 188 mittels Klemmen 192 mit Flügelmuttern 194 an der zugeordneten Seitenwand 178 des Hilfsmaterialaufnahmebehälters 176 lösbar gehalten.

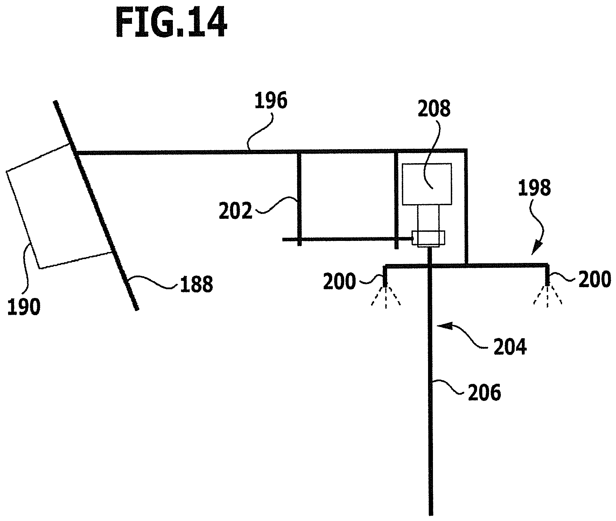

An der Revisionstür 188 ist eine Druckluftrohrleitung 196 gehalten, welche zu einer Aufwirbelungseinrichtung 198 führt (Fig. 14).

Die Aufwirbelungseinrichtung 198 dient dazu, Druckluftimpulse in das darunter befindliche Hilfsmaterial abzugeben, um dieses Hilfsmaterial aufzuwirbeln und so in den durch den Hilfsmaterialaufnahmebehälter 176 hindurchgeführten Rohgasstrom einzubringen.

Außerdem wird durch die Aufwirbelung des Hilfsmaterials mittels der Aufwirbelungseinrichtung 198 eine Homogenisierung der in dem Hilfsmaterialaufnahmebehälter 176 vorhandenen Mischung aus Hilfsmaterial und daran gebundenem Overspray erzielt.

Während des Betriebs der Anlage 100 wird die Aufwirbelungseinrichtung 198 intermittierend, beispielsweise viermal pro Minute für jeweils ungefähr 5 Sekunden, in Betrieb genommen.

Die Aufwirbelungseinrichtung 198 umfasst mehrere, beispielsweise zwei, Austrittsdüsen 200 für Druckluft, welche als Kegeldüsen ausgebildet sind und jeweils einen sich nach unten zu dem Boden 182 des Hilfsmaterialaufnahmebehälters 176 hin erweiternden Druckluftkegel erzeugen können.

Vorzugsweise sind die Austrittsdüsen 200 so ausgebildet und angeordnet, dass die von den Austrittsdüsen 200 erzeugten Druckluftkegel gemeinsam die Bodenfläche des Hilfsmaterialaufnahmebehälters 176 vollständig überstreichen.

Ferner ist an der Druckluftrohrleitung 196 eine Halterung 202 für einen Füllstandssensor 204 angeordnet, welcher ein stabförmiges Sensorelement 206 und ein Sensorgehäuse 208 mit darin untergebrachter Sensorelektronik umfasst (Fig. 14).

Der Füllstandssensor 204 ist als ein analoger, insbesondere kapazitiver, Sensor ausgebildet und dient dazu, ein Signal zu erzeugen, das jeweils einem Wert aus einer Vielzahl diskreter Füllstandshöhen oder aus einem Kontinuum von Füllstandshöhen entspricht, um den Füllstand des Hilfsmaterials in dem Hilfsmaterialaufnahmebehälter 176 möglichst genau ermitteln zu können.

Das stabförmige Sensorelement 206 des Füllstandssensors 204 ist im wesentlichen vertikal ausgerichtet und möglichst weit von den Seitenwänden 178 des Hilfsmaterialaufnahmebehälters 176 in der Nähe der Mitte des Innenraums 186 des Hilfsmaterialaufnahmebehälters 176 angeordnet, um das Messergebnis des Füllstandssensors 204 möglichst wenig durch Randeffekte zu beeinträchtigen (Fig. 13).

Das stabförmige Sensorelement 206 des Füllstandssensors 204 ist im wesentlichen senkrecht zu dem horizontalen Boden 182 des Hilfsmaterialaufnahmebehälters 176 ausgerichtet.

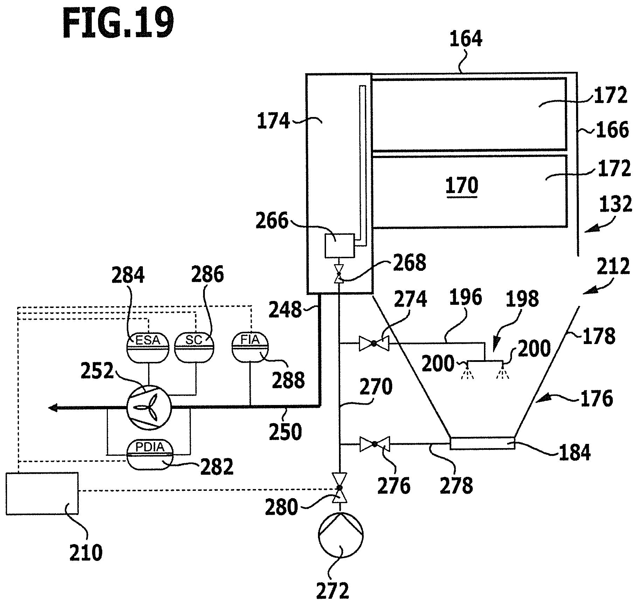

Das Signal, das von dem Füllstandssensor 204 erzeugt wird, wird über eine (nicht dargestellte) Signalleitung an einen elektrischen Anschlusskasten 209 des Filtermoduls 132, der an dem Grundkörper 174 der Filterelemente 172 angeordnet ist (siehe Fig. 7), und von dort an eine Steuervorrichtung der Anlage 100, die in Fig. 19 schematisch dargestellt und mit 210 bezeichnet ist, übermittelt.

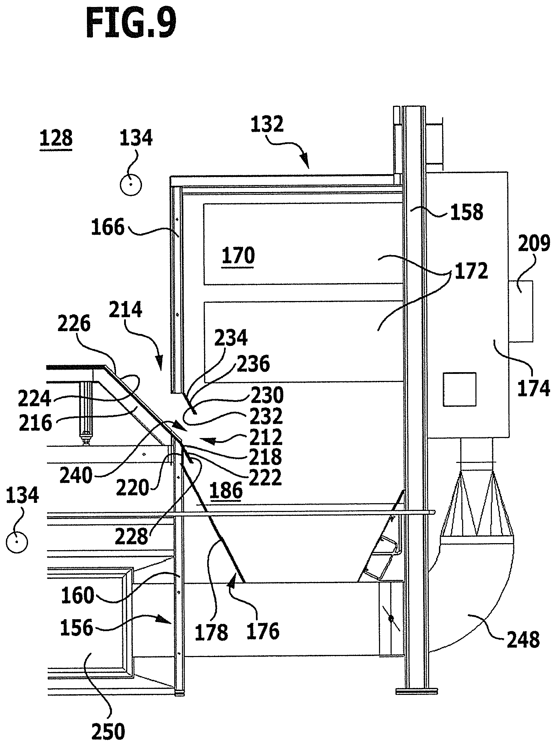

Um die in das Filtermodul 132 eintretende Rohgasströmung gezielt in den Innenraum 186 des Hilfsmaterialaufnahmebehälters 176 hinein zu lenken und einen direkten Zutritt der Rohgasströmung aus der Strömungskammer 128 zu den Filterelementen 172 hin zu verhindern, ist jedes Filtermodul 132 ferner mit einer schlitzförmigen Einlassöffnung 212 versehen, die als ein Einlasskanal 214 ausgebildet ist, der beispielsweise, wie insbesondere aus Fig. 9 zu ersehen ist, einen sich in der Strömungsrichtung des Rohgasstroms bis zu einer Engstelle 240 verengenden durchströmbaren Querschnitt aufweist.

Alternativ oder ergänzend hierzu kann auch vorgesehen sein, dass der Einlasskanal 214 einen sich in der Strömungsrichtung des Rohgasstroms von einer Engstelle 240 aus erweiternden durchströmbaren Querschnitt aufweist.

Der Einlasskanal 214 wird nach unten hin durch eine Einlaufschräge 216, welche sich von den vorderen Stützen 160 der Tragekonstruktion 156 aus unter einem Winkel von beispielsweise ungefähr 40° bis ungefähr 65° gegenüber der Horizontalen geneigt schräg nach oben erstreckt, und durch ein sich an das untere Ende der Einlaufschräge 216 angrenzendes unteres Leitblech 218 begrenzt, welches stärker gegen die Horizontale geneigt ist als die Einlaufschräge 216, beispielsweise unter einem Winkel von ungefähr 55° bis ungefähr 70°, und welches über einen oberen, im wesentlichen vertikal ausgerichteten Abschnitt 220 einer Seitenwand 178 des Hilfsmaterialaufnahmebehälters 176 hinaus vorsteht und in den Innenraum 186 des Hilfsmaterialaufnahmebehälters 176 hineinragt.

Auf diese Weise wirkt das untere Leitblech 218 als ein Rückhalteelement 222, welches Hilfsmaterial aus dem Hilfsmaterialaufnahmebehälter 176 von der Einlassöffnung 212 fernhält und verhindert, dass aufgewirbeltes Hilfsmaterial auf der Seite der Einlassöffnung 212 entlang der Seitenwand 178 aus dem Hilfsmaterialaufnahmebehälter 176 hinaus gelangt.

Außerdem verhindert das untere Leitblech 218 ein Abreißen der Rohgasströmung nach dem Passieren der Einlaufschräge 216 und gewährleistet eine gerichtete Rohgasströmung in den Hilfsmaterialaufnahmebehälter 176 hinein.

Das untere Leitblech 218 weist eine Tiefe (d.h. eine Ausdehnung in der Strömungsrichtung des Rohgasstroms) von beispielsweise ungefähr 100 mm auf.

Die Einlaufschräge 216 und das untere Leitblech 218 erstrecken sich in der Längsrichtung 134 der Strömungskammer 128 über im wesentlichen die gesamte Länge der Einlassöffnung 212 von beispielsweise ungefähr 1 m bis ungefähr 2 m, welche nahezu der Ausdehnung des gesamten Filtermoduls 132 in der Längsrichtung 134 entspricht.

Die Oberseite der Einlaufschräge 216 und die Oberseite des unteren Leitblechs 218 bilden zusammen eine untere Leitfläche 224 der Einlassöffnung 212, welche die Einlassöffnung 212 nach unten begrenzt und in ihrem oberen Abschnitt 226, der durch die Einlaufschräge 216 gebildet ist, gegenüber der Horizontalen eine Neigung von ungefähr 40° bis ungefähr 65° aufweist und in ihrem unteren Abschnitt 228, der durch das untere Leitblech 218 gebildet ist, eine stärkere Neigung gegenüber der Horizontalen von ungefähr 55° bis ungefähr 70° aufweist.

Nach oben hin wird die Einlassöffnung 212 durch den unteren Rand der Vorderwand 166 und durch ein von dem unteren Rand der Vorderwand 166 schräg nach unten in den Innenraum des Filtermoduls 132 abstehendes oberes Leitblech 230 begrenzt.

Das obere Leitblech 230 ist ebenso wie das untere Leitblech 218 unter einem Winkel von beispielsweise ungefähr 55° bis ungefähr 70° gegen die Horizontale geneigt und erstreckt sich in der Längsrichtung 134 über im wesentlichen die gesamte Breite der Einlassöffnung 212 von beispielsweise 1 m oder 2 m.

Das obere Leitblech 230 weist eine Tiefe (d.h. eine Ausdehnung längs der Strömungsrichtung des Rohgasstroms) von beispielsweise ungefähr 150 mm auf.

Die untere Seite des oberen Leitblechs 230 bildet eine obere Leitfläche 232, welche die Einlassöffnung 212 nach oben begrenzt und unter einem Winkel von beispielsweise ungefähr 55° bis ungefähr 70° gegen die Horizontale geneigt ist.

Durch diese obere Leitfläche 232 für den Rohgasstrom wird erreicht, dass die Rohgasströmung nicht an der Vorderwand 166 des Filtermoduls 132 abreißt, sondern direkt in den Hilfsmaterialaufnahmebehälter 176 hinein gelenkt wird.

Das obere Leitblech 230 dient ferner als ein Filterabschirmelement 234, da es so ausgebildet und an der Einlassöffnung 212 angeordnet ist, dass es verhindert, dass das in das Filtermodul 132 eintretende Rohgas direkt zu den Filterelementen 172 strömt.

Ferner dient das obere Leitblech 230 als ein Abweiselement 236, welches von den Filterelementen 170 abgereinigtes Material, welches Hilfsmaterial und an das Hilfsmaterial gebundene Overspray-Partikel enthält, von der Einlassöffnung 212 fernhält.

Von den Filterelementen 172 auf die Oberseite des oberen Leitblechs 230 herabfallendes Material wird vielmehr durch die Schrägstellung des oberen Leitblechs 230 in den Hilfsmaterialaufnahmebehälter 176 gelenkt.

Im Betrieb des Filtermoduls 132 sind sowohl die obere Leitfläche 232 als auch die Oberseite des oberen Leitblechs 230 mit einer Beschichtung aus dem Hilfsmaterial versehen, so dass diese Flächen des oberen Leitblechs 230 leicht zu reinigen sind und kein Overspray direkt an dem oberen Leitblech 230 anklebt.

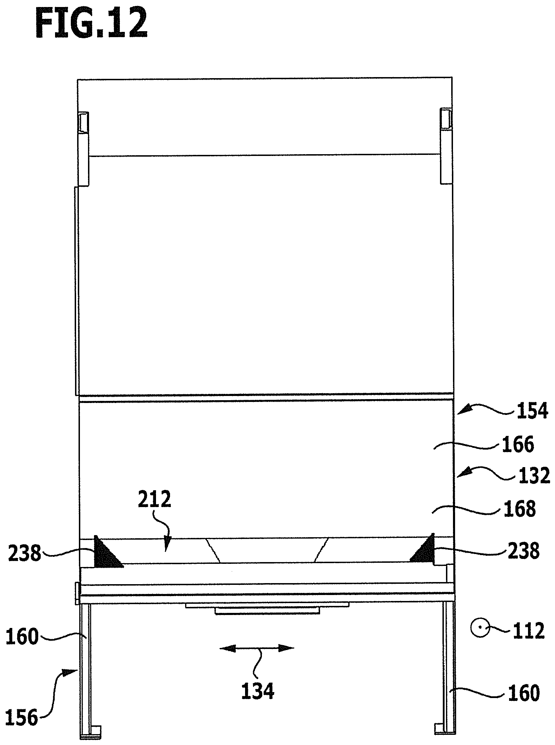

Wie am besten aus Fig. 12 zu ersehen ist, umfasst das Filtermodul 132 ferner zwei Abdeckelemente 238 in Form ungefähr dreieckiger Abdeckbleche, welche den linken und den rechten unteren Eckbereich der Einlassöffnung 212 so abdecken, dass Hilfsmaterial und Overspray aus dem Rohgasstrom von diesen Eckbereichen der Einlassöffnung 212 ferngehalten werden und Ablagerungen von Hilfsmaterial und von Overspray-Partikeln in diesen Eckbereichen und außerhalb des Filtermoduls 132 auf der Einlaufschräge 216 verhindert werden.

Die Oberseiten der Abdeckelemente 238 sind schräg zur Vertikalen und schräg zur Horizontalen ausgerichtet und weisen jeweils eine Oberflächennormale auf, welche in den Außenraum des Filtermoduls 132 nach oben gerichtet ist.

Durch die vorstehend beschriebene Ausgestaltung der Geometrie der Einlassöffnung 212 wird erreicht, dass die Einlassöffnung 212 eine Engstelle 240 aufweist, an welcher der durchströmbare Querschnitt der Einlassöffnung 212 am kleinsten und daher die Rohgasgeschwindigkeit am größten ist.

Vorzugsweise beträgt die Rohgasgeschwindigkeit in der Engstelle von ungefähr 2 m/s bis ungefähr 8 m/s, insbesondere von ungefähr 3 m/s bis ungefähr 5 m/s.

Auf diese Weise wird wirksam verhindert, dass Hilfsmaterial aus dem Inneren des Filtermoduls 132, welches eine geschlossene Box bildet, in die Strömungskammer 128 und von dort in den Applikationsbereich 108 gelangt. Die Aufwirbelung des Hilfsmaterials im Hilfsmaterialaufnahmebehälter 176 und die Abreinigung der Filterelemente 172 können daher zu jedem beliebigen Zeitpunkt erfolgen, ohne die Zufuhr von Rohgas zum Filtermodul 132 oder gar den Betrieb der Spritzlackiereinrichtungen 116 im Applikationsbereich 108 unterbrechen zu müssen.

Ferner ist dadurch, dass der Rohgasstrom in den Hilfsmaterialaufnahmebehälter 176 gerichtet aus der Einlassöffnung 212 austritt, gewährleistet, dass eine Umlenkung des Rohgasstroms im Innenraum 186 des Hilfsmaterialaufnahmebehälters 176 erfolgt. Dadurch wird eine ausreichende Menge von Hilfsmaterial, die durch das Aufwirbeln aus der im Hilfsmaterialaufnahmebehälter 176 befindlichen Vorlage erzeugt wird, durch den Rohgasstrom mitgerissen.

Die Rohgasströmung aus der Strömungskammer 128 durch die Einlassöffnung 212 in den Innenraum des Filtermoduls 132 ist in Fig. 10 als Ergebnis einer Strömungssimulation dargestellt. Hieraus ist deutlich zu ersehen, dass sich im Innenraum des Filtermoduls 132 eine Strömungswalze ausbildet, deren horizontal verlaufende Achse etwas tiefer liegt als der obere Rand des Hilfsmaterialaufnahmebehälters 176.

Auf der der Einlassöffnung 212 gegenüberliegenden Seite des Hilfsmaterialaufnahmebehälters 176 strömt die mit Hilfsmaterial beladene Rohgasströmung wieder aus dem Hilfsmaterialaufnahmebehälter 176 heraus und verteilt sich dann über die gesamte Tiefe des Filterelementaufnahmeraums 170, so dass eine Verwirbelung um die Filterelemente 172 ausgebildet wird und aufgrund der hohen Dynamik, die der Rohgasstrom in der Engstelle 240 erhalten hat, eine homogene Verteilung des Hilfsmaterials auf die einzelnen Filterelemente 172 gewährleistet ist.

Da sich kaum Bauteile des Filtermoduls 132 im Strömungsweg des ankommenden Rohgasstroms befinden, wird eine Verschmutzung von Bauteilen durch klebrigen Lack weitgehend verhindert und trotzdem eine für die Filtrierung günstige Anströmung der Filterelemente 172 erhalten.

Dadurch, dass die mittlere Strömungsrichtung des durch die Engstelle 240 in das Filtermodul 132 eintretenden Rohgasstroms unter einem Winkel von mehr als 40° gegen die Horizontale geneigt ist, wird verhindert, dass sich im unteren Bereich des Filterelementaufnahmeraums 170 eine Luftschleuse ausbildet, welche von den Filterelementen 172 abgereinigtes Material sofort wieder zu den Filterelementen 172 zurück befördern würde und zur Ausbildung einander entgegengesetzter Luftwirbel innerhalb des Filtermoduls 132 führen könnte.

Um zwei in einer Modulreihe 136 nebeneinander angeordnete Filtermodule 132 in einfacher Weise und stabil miteinander verbinden zu können oder um ein Filtermodul 132 mit einer angrenzenden Quertrennwand 142 verbinden zu können, umfasst die Tragekonstruktion 156 jedes Filtermoduls 132 mindestens eine hintere Stütze 158, die eine vertikal und in der Querrichtung 112 ausgerichtete, im wesentlichen ebene Anlagefläche 242 aufweist, welche an eine entsprechende Anlagefläche 242 eines benachbarten Filtermoduls 132 oder an eine benachbarte Quertrennwand 142 angelegt werden kann (Fig. 7).

In der Anlagefläche 242 sind ferner Durchtrittsöffnungen 244 für den Durchtritt von Befestigungsmitteln vorgesehen, mittels welcher die als Verbindungselement 246 dienende hintere Stütze 158 mit einem Verbindungselement 246 eines benachbarten Filtermoduls 132 oder mit einer benachbarten Quertrennwand 142 verbindbar ist.

Die als Verbindungselement 246 dienende hintere Stütze 158 weist vorzugsweise ein ungefähr U-förmiges Profil auf.

Wie aus Fig. 7 zu ersehen ist, weist jedes Mittelmodul 140 zwei als Verbindungselemente 246 dienende hintere Stützen 158 mit U-förmigen Profilen auf, deren offene Seiten einander zugewandt sind, damit das Mittelmodul 140 auf beiden Seiten mit einem angrenzenden weiteren Filtermodul 132 oder mit einer Quertrennwand 142 verbindbar ist.

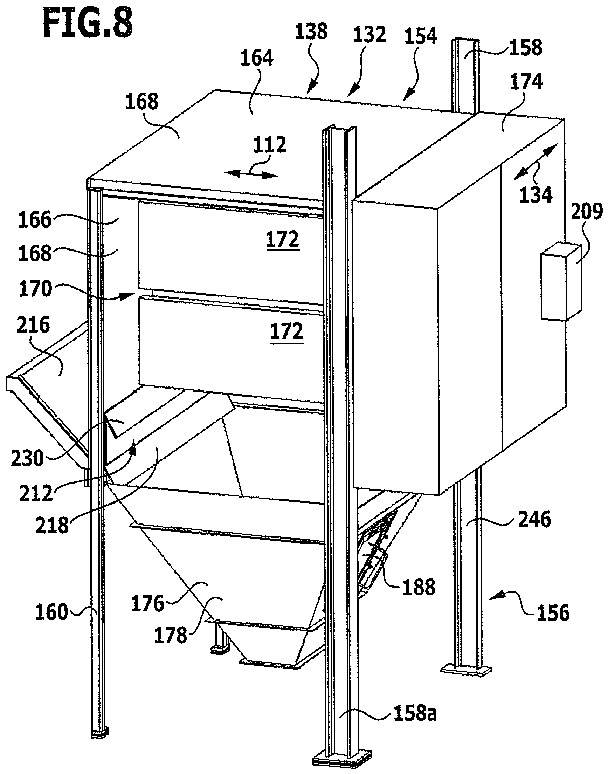

Wie aus Fig. 8 zu ersehen ist, weist jedes Eckmodul 138 nur eine als Verbindungselement 246 ausgebildete hintere Stütze 158 mit U-förmigem Profil auf; die gegenüberliegende hintere Stütze 158a, welche weder mit einem benachbarten Filtermodul 132 noch mit einer benachbarten Quertrennwand 142 verbunden werden muss, kann zur Erhöhung ihrer mechanischen Festigkeit statt eines U-förmigen Profils beispielsweise ein T-förmiges Profil aufweisen.

Im übrigen stimmen die Eckmodule 138 hinsichtlich Aufbau und Funktion mit den vorstehend im Detail beschriebenen Mittelmodulen 140 überein.

Im Betrieb jedes Filtermoduls 132 überstreicht der Rohgasstrom 120 die Filteroberflächen der Filterelemente 172, wobei sowohl das mitgeführte Hilfsmaterial als auch der mitgeführte Nasslack-Overspray an den Filteroberflächen abgeschieden werden, und das gefilterte Rohgas gelangt als Abluftstrom durch die porösen Filteroberflächen in die Innenräume der Filterelemente 172, die mit einem Hohlraum innerhalb des Grundkörpers 174, von dem die Filterelemente 172 abstehen, verbunden sind. Von diesem Hohlraum gelangt der gereinigte Abluftstrom in jeweils ein Abluftrohr 248, welches von dem Grundkörper 174 der Filterelemente 172 jedes Filtermoduls 132 zu einem ungefähr mittig unter der Strömungskammer 128 angeordneten und parallel zur Längsrichtung 134 der Strömungskammer 128 verlaufenden Abluftkanal 250 führt (siehe insbesondere die Fig. 2 und 3).

Wie aus der schematischen Darstellung der Fig. 19 zu ersehen ist, gelangt die von dem Nasslack-Overspray gereinigte Abluft aus dem Abluftkanal 250 zu einem Abluftgebläse 252, von wo die gereinigte Abluft über ein (nicht dargestelltes) Kühlregister und eine (nicht dargestellte) Zuführleitung einer oberhalb des Applikationsbereichs 108 angeordneten (nicht dargestellten) Luftkammer, dem sogenannten Plenum, zugeführt wird.

Von dieser Luftkammer gelangt die gereinigte Abluft über eine Filterdecke in den Applikationsbereich 108 zurück.

Von der Zuführleitung zweigt eine (nicht dargestellte) Abluftleitung ab, durch welche ein Teil des gereinigten Abluftstroms (beispielsweise über einen Kamin) an die Umgebung abgegeben wird.

Dieser an die Umgebung abgegebene Teil des Abluftstroms wird durch Frischluft ersetzt, welche in die Strömungskammer 128 über zwei Luftschleiererzeugungsvorrichtungen 254 eingespeist wird, die über jeweils eine Zuluftleitung 256 mit einer (nicht dargestellten) Zuluftanlage verbunden sind (Fig. 1 bis 3).

Jede der Luftschleiererzeugungsvorrichtungen 254 umfasst jeweils eine sich in der Längsrichtung 134 der Strömungskammer 128 erstreckende Zuluftkammer, die über die Zuluftleitung 256 mit Zuluft gespeist wird und über einen Spalt 258, welcher sich längs der Längsrichtung 134 erstreckt und in vertikaler Richtung eine Ausdehnung im Bereich von beispielsweise ungefähr 15 cm bis ungefähr 50 cm aufweist, in einen oberen Abschnitt 260 der Strömungskammer 128 mündet, welcher nach oben durch den Applikationsbereich 108 und nach unten durch die Deckenwände 164 der Filtermodule 132 begrenzt ist.

Der Spalt 258 jeder Zuluftkammer ist knapp oberhalb der Deckenwände 164 der Filtermodule 132 angeordnet, so dass durch das Einströmen der Zuluft aus den Zuluftkammern in im wesentlichen horizontaler Richtung längs der Oberseiten der Deckenwände 164 der Filtermodule 132 in die Strömungskammer 128 an der Oberseite der Filtermodule 132 jeweils ein Luftschleier gebildet wird, welcher von der jeweils zugeordneten Luftschleiererzeugungsvorrichtung 254 ausgehend zu einer Engstelle 262 zwischen den oberen Rändern der einander gegenüberstehenden Modulreihen 136 gerichtet ist und dadurch verhindert, dass der mit dem Nasslack-Overspray beladene Rohgasstrom 120 aus dem Applikationsbereich 108 zu der Oberseite der Filtermodule 132 gelangt und der Nasslack-Overspray aus dem Rohgasstrom 120 sich an der Oberseite der Filtermodule 132 absetzt.

An der Engstelle 262 der Strömungskammer 128 nimmt der vom Rohgasstrom durchströmbare horizontale Querschnitt der Strömungskammer 128 sprunghaft ab, so dass die Strömungsgeschwindigkeit des Rohgasstroms in dem unterhalb der Engstelle 262 befindlichen unteren Abschnitt 263 der Strömungskammer 128 deutlich höher ist als in dem oberhalb der Engstelle 262 befindlichen oberen Abschnitt 260 der Strömungskammer 128.

Die mittlere Strömungsrichtung der Luft in den von der Luftschleiererzeugungsvorrichtungen 254 erzeugten Querluftschleiern an der Oberseite der Filtermodule 132 ist in Fig. 3 durch die Pfeile 264 veranschaulicht.

Der Großteil der durch den Applikationsbereich 108 hindurchgeführten Luft wird somit in einem Umluftkreislauf geführt, welcher den Applikationsbereich 108, die Strömungskammer 128, die Filtermodule 132, die Abluftrohre 248, den Abluftkanal 250, das Abluftgebläse 252 sowie die Zuführleitung und die Luftkammer über dem Applikationsbereich 108 umfasst, wobei eine ständige Aufheizung der im Umluftkreislauf geführten Luft durch die Frischluftzufuhr über die Luftschleiererzeugungsvorrichtungen 254 vermieden wird.

Da die Abtrennung des Nasslack-Oversprays aus dem Rohgasstrom 120 mittels der Filterelemente 172 trocken, d.h. ohne Auswaschung mit einer Reinigungsflüssigkeit, erfolgt, wird die im Umluftkreislauf geführte Luft beim Abtrennen des Nasslack-Oversprays nicht befeuchtet, so dass auch keinerlei Vorrichtungen zur Entfeuchtung der im Umluftkreislauf geführten Luft erforderlich sind.

Ferner sind auch keine Vorrichtungen zur Abtrennung von Nasslack-Overspray aus einer Auswasch-Reinigungsflüssigkeit erforderlich.

Dadurch, dass der von dem Rohgasstrom durchströmbare horizontale Querschnitt der Strömungskammer 128 durch das Vorhandensein der Filtermodule 132 im unterhalb der Engstelle 262 liegenden unteren Abschnitt 263 der Strömungskammer 128 deutlich geringer ist als im oberen Abschnitt 260 der Strömungskammer 128 (beispielsweise im unteren Abschnitt 263 nur ungefähr 35 % bis ungefähr 50 % der horizontalen Querschnittsfläche der Strömungskammer 128 im oberen Abschnitt 260 derselben beträgt), wird die Strömungsgeschwindigkeit des Rohgasstroms auf dessen Weg vom Applikationsbereich 108 durch die Strömungskammer 128 bis zu den Einlassöffnungen 212 der Filtermodule 132 kontinuierlich erhöht, so dass sich ein ansteigendes Geschwindigkeitsprofil in dem Rohgasstrom ergibt.

Dieses ansteigende Geschwindigkeitsprofil hat zur Folge, dass aus den Filtermodulen 132 austretende Partikel nicht in den Applikationsbereich 108 gelangen können.

Dabei beträgt die Geschwindigkeit der Rohgasströmung im Applikationsbereich 108 und im oberen Abschnitt 260 der Strömungskammer 128 beispielsweise bis zu ungefähr 0,6 m/s, während sie im unteren Abschnitt 263 der Strömungskammer beispielsweise im Bereich von ungefähr 0,6 m/s bis ungefähr 3 m/s liegt und in den Einlassöffnungen 212 der Filtermodule 132 bis auf einen Maximalwert im Bereich von ungefähr 3 m/s bis ungefähr 5 m/s ansteigt.

Dadurch, dass die Filterelemente 172 in den Filtermodulen 132 komplett eingehaust sind, ist eine Aktivierung der Filterelemente 172 durch Aufbringen von Hilfsmaterial und eine Abreinigung der Filterelemente 172 jederzeit während des laufenden Lackierprozesses im Applikationsbereich 108 möglich.

Wird die Breite der Lackierkabine 110, d.h. deren Ausdehnung in der Querrichtung 112, verändert, so werden dennoch gleich große Filtermodule 132 verwendet; die Anpassung der Vorrichtung 126 zum Abtrennen von Nasslack-Overspray erfolgt in diesem Falle lediglich durch eine Erhöhung des Abstands der beiden Modulreihen 136 voneinander und durch eine Verbreiterung des begehbaren Steges 146.

Das Geschwindigkeitsprofil der Rohgasströmung ändert sich bei einer solchen Verbreiterung der Lackierkabine 110 somit nur in dem Bereich bis zu dem begehbaren Steg 146; ab hier, also insbesondere beim Passieren der Einlassöffnungen 212 der Filtermodule 132, ist das Geschwindigkeitsprofil der Rohgasströmung nur noch von der pro Zeiteinheit durchströmenden Rohgasmenge abhängig, nicht aber von der Geometrie der Strömungskammer 128.

Der Abstand der (begehbaren) Deckenwände 164 der Filtermodule 132 von der Unterkante der durch die Lackierkabine 110 hindurch geförderten Fahrzeugkarosserien 102 beträgt aus Wartungsgründen mindestens ungefähr 1,5 m.

Die Filterelemente 172 werden in bestimmten Zeitintervallen, wenn ihre Beladung mit Nasslack-Overspray und Hilfsmaterial ein vorgegebenes Maß erreicht hat, durch Druckluftimpulse abgereinigt.

Diese Abreinigung kann (in Abhängigkeit vom Druckverlustanstieg an den Filterelementen 172) beispielsweise einmal bis sechsmal pro 8-Stunden-Arbeitsschicht, d.h. ungefähr alle 1 bis 8 Stunden, erfolgen.

Die erforderlichen Druckluftimpulse werden mittels einer Abpulseinheit 266, welche an dem Grundkörper 174 der Filterelemente 172 jedes Filtermoduls 132 angeordnet ist, erzeugt, wobei die Abpulseinheit 266 dazu in der Lage ist, Druckluftimpulse an Druckluftrohre abzugeben, welche innerhalb des jeweiligen Grundkörpers 174 verlaufen und von der Abpulseinheit 266 in die Innenräume der Filterelemente 172 führen (Fig. 19).

Von den Innenräumen der Filterelemente 172 gelangen die Druckluftimpulse durch die porösen Filteroberflächen in den Filterelementaufnahmeraum 170, wobei die an den Filteroberflächen gebildete Sperrschicht aus Hilfsmaterial und dem daran abgeschiedenen Nasslack-Overspray von den Filteroberflächen abgelöst wird, so dass die Filteroberflächen in ihren abgereinigten Ursprungszustand zurückversetzt werden.

Der Abpulseinheit 266 umfasst ein Abpulsventil 268, über welches der Abpulseinheit 266 Druckluft aus einer Druckluftzuführleitung 270 zuführbar ist, die von einem Kompressor 272 gespeist wird (siehe Fig. 19).

An diese Druckluftzuführleitung 270 ist über ein Druckluftventil 274 auch die Druckluftrohrleitung 196 angeschlossen, welche zu den Austrittsdüsen 200 der Aufwirbelungseinrichtung 198 führt.

Ferner ist an die Druckluftzuführleitung 270 auch der Fluidboden 184 jedes Hilfsmaterialaufnahmebehälters 176 über eine mit einem Druckluftventil 276 versehene Druckluftleitung 278 angeschlossen.

Durch das Öffnen des Abpulsventils 268, des Druckluftventils 274 bzw. des Druckluftventils 276 kann somit, abwechselnd oder gleichzeitig, eine Abreinigung der Filterelemente 172, eine Aufwirbelung des Hilfsmaterials im Hilfsmaterialaufnahmebehälter 176 bzw. eine Fluidisierung des Hilfsmaterials im Hilfsmaterialaufnahmebehälter 176 mittels des Fluidbodens 184 ausgelöst werden.

Zwischen den genannten Druckluftventilen und dem Kompressor 272 ist in der Druckluftzuführleitung 270 ein Sperrventil 280 angeordnet, welches durch die Steuervorrichtung 210 im örtlichen Leitstand ansteuerbar ist.

Die Steuervorrichtung 210 sperrt durch Schließen des Sperrventils 280 die Druckluftzufuhr vom Kompressor 272 zu den genannten Druckluftverbrauchern eines Filtermoduls 132 oder aller Filtermodule 132, wenn sie feststellt, dass keine ausreichende Rohgasströmung durch die Filterelemente 172 vorhanden ist.

Um zu ermitteln, ob eine ausreichende Rohgasströmung durch die Filterelemente 172 vorhanden ist, kann beispielsweise vorgesehen sein, dass die Steuervorrichtung 210 den Betriebszustand des Abluftgebläses 252 überwacht.

Diese Überwachung des Betriebszustands des Abluftgebläses 252 kann beispielsweise mittels eines Differenzdruckmessers (PDIA) 282 erfolgen, welcher den Druckabfall zwischen der Druckseite und der Saugseite des Abluftgebläses 252 misst.

Alternativ oder ergänzend hierzu kann der Betriebszustand des Abluftgebläses 252 von der Steuervorrichtung 210 auch mittels eines Stromüberwachungsgerätes (ESA) 284 und/oder mittels eines Frequenzumrichters (SC) 286 überwacht werden.

Ferner kann vorgesehen sein, dass das Fehlen einer ausreichenden Rohgasströmung durch die Filterelemente 172 mittels eines Durchflussmessgeräts (FIA) 288 ermittelt wird, welches den Gasfluss durch den Abluftkanal 250 oder durch eines oder mehrere der Abluftrohre 248 misst.

Ferner besteht die Möglichkeit, das Fehlen einer ausreichenden Rohgasströmung durch die Filterelemente 172 durch Messung des Druckabfalls an den Filterelementen 172 eines Filtermoduls 132 oder aller Filtermodule 132 zu ermitteln.

Wenn die Steuervorrichtung 210 aufgrund der ihr übermittelten Signale des Differenzdruckmessers 282, des Stromüberwachungsgeräts 284, des Frequenzumrichters 286 und/oder des Durchflussmessgeräts 288 feststellt, dass die Rohgasströmung durch die Filterelemente 172 unterhalb eines vorgegebenen Schwellenwerts liegt, wird die Druckluftzufuhr zu mindestens einem der Filtermodule 132 durch Schließen des Sperrventils 280 gesperrt.

Auf diese Weise wird verhindert, dass Hilfsmaterial durch Aufwirbeln mittels der Aufwirbelungseinheit 198, durch Abreinigen der Filterelemente 172 oder durch Fluidisieren des Hilfsmaterialvorrats im Hilfsmaterialaufnahmebehälter 176 in den Strömungsweg des Rohgases und insbesondere durch die Einlassöffnung 212 eines Filtermoduls 132 in die Strömungskammer 128 und von dort in den Applikationsbereich 108 gelangt.

Diese Sperrung der Druckluftzufuhr kann für alle Filtermodule 132 gemeinsam oder für die einzelnen Filtermodule 132 getrennt voneinander erfolgen. Im letzteren Falle erfolgt die Ermittlung des Fehlens einer ausreichenden Rohgasströmung durch die Filterelemente 172 für jedes der Filtermodule 132 getrennt, und es ist entweder für jedes Filtermodul 132 ein eigener Kompressor 272 vorgesehen oder die Druckluftzuführleitungen 270 zu den einzelnen Filtermodulen 132 sind über separat voneinander schaltbare Sperrventile 280 einzeln sperrbar oder freigebbar.

Das Hilfsmaterial wird bei der vorstehend beschriebenen Vorrichtung 126 zum Abtrennen von Nasslack-Overspray ausschließlich innerhalb der Filtermodule 132 durch Aufwirbeln des Hilfsmaterials in dem jeweiligen Hilfsmaterialaufnahmebehälter 176 dem Rohgasstrom zugegeben.

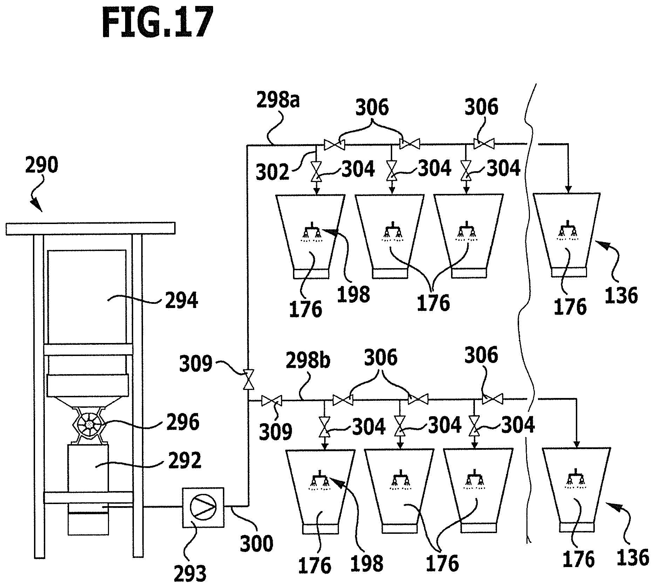

Um frisches Hilfsmaterial den in ihrer Arbeitsposition innerhalb der Filtermodule 132 fest montierten Hilfsmaterialaufnahmebehältern 176 zuführen zu können, umfasst die Vorrichtung 126 zum Abtrennen von Nasslack-Overspray eine in Fig. 17 schematisch dargestellte Hilfsmaterial-Zuführvorrichtung 290, welche einen Vorlagebehälter 292 umfasst, der als Blowpot oder als einfacher Fluidisierungsbehälter ausgebildet sein kann.

Blowpots sind an sich beispielsweise aus der JP 02123025 A oder der JP 06278868 A bekannt und wurden in Beschichtungsanlagen bisher dazu verwendet, Pulverlack zu den in der Nähe der Zerstäuber befindlichen Applikationsbehältern zu fördern. Es handelt sich um relativ kleine verschließbare Behälter mit einem luftdurchlässigen Boden, durch den Luft zum Fluidisieren des Pulvers und zu dessen Förderung in den Behälter geleitet wird.

Während ein Blowpot durch den Druck der Fluidisierungsluft entleert werden kann, wird andernfalls dem Fluidisierungsbehälter zur Materialförderung eine Pulverdosierpumpe 293 nachgeschaltet (siehe Fig. 1), wie beispielsweise die in der WO 03/024612 A1 beschriebene sogenannte DDF-Pumpe oder eine andere nach dem Dichtstromprinzip mit Saug-/Druckwechsel fördernde Dosierpumpe, wie sie beispielsweise aus der EP 1 427 536 B1, der WO 2004/087331 A1 oder aus Fig. 3 der DE 101 30 173 A1 bekannt sind.

Zum Befüllen des Vorlagebehälters 292 ist oberhalb desselben ein größerer Vorratsbehälter (Gebinde oder "Big Bag") 294 für das frische Hilfsmaterial angeordnet, aus dem im einfachsten Fall das Material durch eine mit einer Klappe verschließbare Öffnung in den Vorlagebehälter (Silo) 292 rieseln kann. Um den Vorlagebehälter 292 auch während der Materialförderung kontinuierlich nachfüllen zu können und Zeitverluste im Betrieb zu vermeiden, ist aber vorzugsweise zwischen dem Vorratsbehälter 294 und dem Vorlagebehälter 292 eine mechanische Fördereinrichtung 296, beispielsweise eine Zellenradschleuse oder eine Förderschnecke, angeordnet. Bei Einsatz einer solchen Fördereinrichtung lässt sich vorteilhafterweise auch eine gewünschte Füllmenge einstellen, im Fall einer Zellenradschleuse über die vorab bestimmte Füllmenge pro Zelle.

Der Vorlagebehälter 292 ist über eine in zwei Zweige 298a, 298b verzweigende Hauptleitung 300, von der Stichleitungen 302 zu jeweils einem der Hilfsmaterialaufnahmebehälter 176 führen, mit jedem der Hilfsmaterialaufnahmebehälter 176 verbunden. Dabei führt jeder der Zweige 298a, 298b der Hauptleitung 300 jeweils zu den Hilfsmaterialaufnahmebehältern 176 einer Modulreihe 136.

Die Hauptleitung 300 besteht vorzugsweise aus flexiblen Schläuchen.

Hierfür können Schläuche mit einem Innendurchmesser bis etwa 14 mm, insbesondere von ungefähr 6 mm bis ungefähr 12 mm, verwendet werden.

Die Stichleitungen 302 können rohrförmig sein und sind mit jeweils einem mechanischen Quetschventil 304 versehen, wobei in der Strömungsrichtung des Hilfsmaterials hinter der Abzweigung der jeweiligen Stichleitung 302 jeweils ein zweites Quetschventil 306 angeordnet ist.

Weitere Quetschventile 309 sind an der Verzweigung der beiden Zweige 298a, 298b der Hauptleitung 300 angeordnet, um diese beiden Zweige 298a, 298b nach Bedarf öffnen oder schließen zu können.

Im Betrieb der Hilfsmaterial-Zuführvorrichtung 290 sind die Hauptleitung 300 und alle Stichleitungen 302 zunächst leer. Wenn ein bestimmter Hilfsmaterialaufnahmebehälter 176 mit frischem Hilfsmaterial beschickt werden soll, wird die Hauptleitung hinter der Abzweigstelle der zugehörigen Stichleitung 302 durch Schließen des jeweils zugeordneten Quetschventils 306 gesperrt, die betreffende Stichleitung 302 durch Öffnen des zugeordneten Quetschventils 304 geöffnet und anschließend das Hilfsmaterial von dem Vorlagebehälter 292 in den betreffenden Hilfsmaterialaufnahmebehälter 176 gefördert.

Anschließend wird der vorstehend beschriebene Leitungsweg in den betreffenden Hilfsmaterialaufnahmebehälter 176 entleert und gespült. Dies bietet den Vorteil, dass die Beschickungsmenge immer genau bestimmt und dosierbar ist und dass der Leitungsweg nicht blockiert werden kann, da stets eine Spülung in den beschickten Hilfsmaterialaufnahmebehälter 176 erfolgt.

Jede der Stichleitungen 302 mündet in eine der Seitenwände 178 des jeweils zugeordneten Hilfsmaterialaufnahmebehälters 176, vorzugsweise in einem Bereich nahe des oberen Randes des Hilfsmaterialaufnahmebehälters 176, damit eine möglichst große Hilfsmaterialmenge durch die Stichleitung 302 zugeführt werden kann.

Die Stichleitung 302, welche zu dem jeweils letzten Hilfsmaterialaufnahmebehälter 176 einer Modulreihe 136 führt, bedarf keiner Quetschventilanordnung, da zur Beschickung dieses letzten Hilfsmaterialaufnahmebehälters 176 lediglich alle in der Hauptleitung 300 stromaufwärts von diesem Hilfsmaterialaufnahmebehälter 176 angeordneten Quetschventile 306 und 309 geöffnet sein müssen.

Statt der vorstehend beschriebenen Quetschventilanordnungen können an den Verzweigungen des Hilfsmaterial-Leitungssystems auch aus dem Stand der Technik an sich bekannte mechanische Quetschweichen oder andere Formen von Pulverweichen vorgesehen sein.

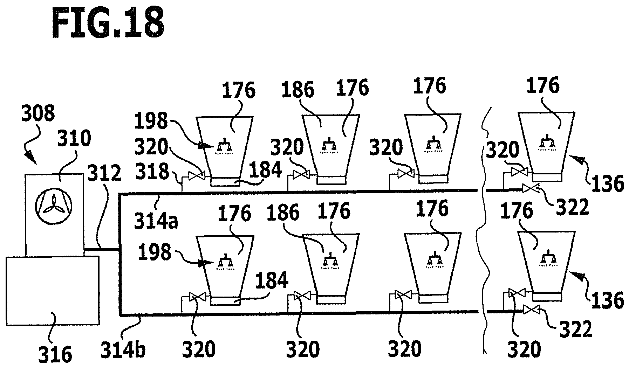

Um vor der Zufuhr von frischem Hilfsmaterial zu einem Hilfsmaterialaufnahmebehälter 176 das darin angesammelte, mit Overspray vermischte Hilfsmaterial entnehmen und einer Entsorgung oder Weiterverwertung zuführen zu können, umfasst die Vorrichtung 126 zum Abtrennen von Nasslack-Overspray ferner eine in Fig. 18 schematisch dargestellte Hilfsmaterial-Abführvorrichtung 308.

Die Hilfsmaterial-Abführvorrichtung 308 umfasst ihrerseits ein Sauggebläse 310, beispielsweise ein Staubsaugergebläse, welches gebrauchtes Hilfsmaterial aus einer Hauptleitung 312, die sich in zwei Zweige 314a, 314b verzweigt, in einen unter dem Sauggebläse 310 angeordneten Sammelbehälter 316 fördert.

Jeweils einer der Zweige 314a, 314b der Hauptleitung 312 führt zu den Hilfsmaterialaufnahmebehältern 176 einer Modulreihe 136 und ist über jeweils eine Stichleitung 318, welche mittels eines Quetschventils 320 verschließbar ist, an jeden der Hilfsmaterialaufnahmebehälter 176 der betreffenden Modulreihe 136 angeschlossen.

Am Ende jedes Zweiges 314a, 314b der Hauptleitung 312 ist jeweils ein Kugelhahn 322 angeordnet, durch welchen bei Bedarf Förderluft in die Hauptleitung 312 zuführbar ist, um das Absaugen des Hilfsmaterials aus der Hauptleitung 312 zum Sauggebläse 310 zu erleichtern.

Die Stichleitungen 318 münden jeweils knapp über dem Fluidboden 184 in den Innenraum 186 des jeweiligen Hilfsmaterialaufnahmebehälters 176, vorzugsweise in einem Eckbereich des Hilfsmaterialaufnahmebehälters 176, in welchem zwei Seitenwände 178 aneinandergrenzen.

Besonders günstig für eine effiziente und möglichst vollständige Absaugung des gebrauchten Hilfsmaterials aus einem Hilfsmaterialaufnahmebehälter 176 ist es, wenn sich die Stichleitung 318 in zwei Absaugleitungen verzweigt, von denen jede an einem anderen Eckbereich in den Innenraum 186 des Hilfsmaterialaufnahmebehälters 176 mündet.

Wenn ein bestimmter Hilfsmaterialaufnahmebehälter 176 von gebrauchtem, mit Overspray vermischtem Hilfsmaterial entleert werden soll, so wird hierfür das Quetschventil 320 der jeweils zugeordneten Stichleitung 318 geöffnet und mittels des Sauggebläses 310 das im Hilfsmaterialaufnahmebehälter 176 vorhandene Material durch die Stichleitung 318 und die Hauptleitung 312 angesaugt und in den Sammelbehälter 316 gefördert.

Der Absaugvorgang wird durch Schließen des jeweils zugeordneten Quetschventils 320 beendet.

Während des Absaugvorgangs wird der Fluidboden 184 des betreffenden Hilfsmaterialaufnahmebehälters 176 dauerhaft in Betrieb genommen, d.h. während des ganzen Absaugvorgangs mit Druckluft durchströmt, um das abzusaugende Material zu fluidisieren und gut fließfähig zu machen.

Ferner kann das Absaugen des gebrauchten Materials aus dem Hilfsmaterialaufnahmebehälter 176 dadurch unterstützt werden, dass während des Absaugvorgangs die Aufwirbelungseinrichtung 198 des betreffenden Hilfsmaterialaufnahmebehälters 176 kontinuierlich oder intervallweise (für beispielsweise 6 x 5 Sekunden pro Minute) in Betrieb genommen wird, weil durch die Beaufschlagung des abzusaugenden Materials mit Druckluft von oben durch die Austrittsdüsen 200 der Aufwirbelungseinrichtung 198 das Material aufgelockert und zu den Mündungsöffnungen der Stichleitung 318 hin bewegt wird.

Falls die Absaugung des gebrauchten Hilfsmaterials aus einem der Hilfsmaterialaufnahmebehälter 176 nicht einwandfrei funktioniert, was daran zu erkennen ist, dass der zugeordnete Füllstandssensor 204 einen nicht mehr absinkenden Füllstand meldet, muss der Betrieb der Vorrichtung 126 zum Abtrennen von Nasslack-Overspray nicht unterbrochen werden. Vielmehr kann stattdessen Hilfsmaterial aus einem anderen Hilfsmaterialaufnahmebehälter 176 abgesaugt werden, welcher an demselben Zweig 314a oder 314b der Hauptleitung 312 angeschlossen ist. Hierdurch kann in vielen Fällen die Blockade des Materialtransports aus dem blockierten Hilfsmaterialaufnahmebehälter 176 behoben werden, so dass anschließend das Material aus dem zuvor blockierten Hilfsmaterialaufnahmebehälter 176 abgesaugt werden kann.

Das aus den Hilfsmaterialaufnahmebehälter 176 abgesaugte Material, welches Hilfsmaterial zusammen mit Overspray-Partikeln enthält, kann entweder entsorgt oder - gegebenenfalls nach einer Aufbereitung - zumindest teilweise in der Beschichtungsanlage wiederverwendet werden.

Ferner kann vorgesehen sein, die Stoffe des Hilfsmaterials so zu wählen, dass sie nach Gebrauch in der Beschichtungsanlage für andere Zwecke als für die Beschichtung von Werkstücken verwertet werden können. Beispielsweise kann das gebrauchte Hilfsmaterial als Dämmmaterial verwendet oder, beispielsweise in der Ziegel- oder Zementindustrie oder dergleichen, thermisch verwertet werden, wobei der an das Hilfsmaterial gebundene Nasslack-Overspray ebenfalls als Energieträger bei einem für die Produktion erforderlichen Verbrennungsvorgang genutzt werden kann.

Nach dem Absaugen des gebrauchten Hilfsmaterials aus einem Hilfsmaterialaufnahmebehälter 176 wird derselbe mittels der vorstehend bereits beschriebenen Hilfsmaterial-Zuführvorrichtung 290 mit frischem Hilfsmaterial befüllt, und zwar beispielsweise bis zu einem Erstbefüllungsfüllstand von ungefähr 50 % des gesamten Fassungsvermögens des Hilfsmaterialaufnahmebehälters 176.

Durch die Anreicherung von Nasslack-Overspray, welcher eine geringere Dichte aufweist als das Hilfsmaterial, in dem Gemisch aus Hilfsmaterial und Overspray, welches in dem Hilfsmaterialaufnahmebehälter 176 vorhanden ist, nimmt die Dichte dieses Gemisches während des Betriebs eines Filtermoduls 132 immer weiter ab, so dass die Sperrschicht, welche sich auf den Filterelementen 172 des Filtermoduls 132 aufbaut, ein immer größeres Volumen aufweist.

Der Füllstand des Materials im Hilfsmaterialaufnahmebehälter 176 unmittelbar vor einem Abreinigungsvorgang der Filterelemente 172 nimmt daher immer weiter ab.

Bei einem vorgegebenen Restfüllstand, welcher beispielsweise ungefähr 10 % des Fassungsvermögens des Hilfsmaterialaufnahmebehälters 176 entspricht, wird das mit Overspray vermischte Hilfsmaterial aus dem Hilfsmaterialaufnahmebehälter 176 abgesaugt, wie vorstehend beschrieben. Durch das Absaugen vor einem Abreinigungsvorgang der Filterelemente 172 wird erreicht, dass hauptsächlich das unbrauchbar gewordene Material, das sich im Hilfsmaterialaufnahmebehälter 176 angesammelt hat und nicht die Sperrschicht auf den Filterelementen 172 bildet, aus dem Hilfsmaterialaufnahmebehälter 176 entnommen wird.

Alternativ zu dieser Vorgehensweise kann auch vorgesehen sein, dass der Füllstand des Materials im Hilfsmaterialaufnahmebehälter 176 jeweils nach einem Abreinigungsvorgang der Filterelemente 172 des Filtermoduls 132 gemessen wird und ein Absaugvorgang eingeleitet wird, wenn ein vorgegebener Höchstfüllstand, beispielsweise 90 % des maximalen Fassungsvermögens des Hilfsmaterialaufnahmebehälters 176, erreicht ist.

In jedem Fall wird der Füllstand des Materials im Hilfsmaterialaufnahmebehälter 176, welcher einen Absaugvorgang loslöst, mittels des Füllstandssensors 204, der im jeweiligen Hilfsmaterialaufnahmebehälter 176 angeordnet ist, bestimmt.

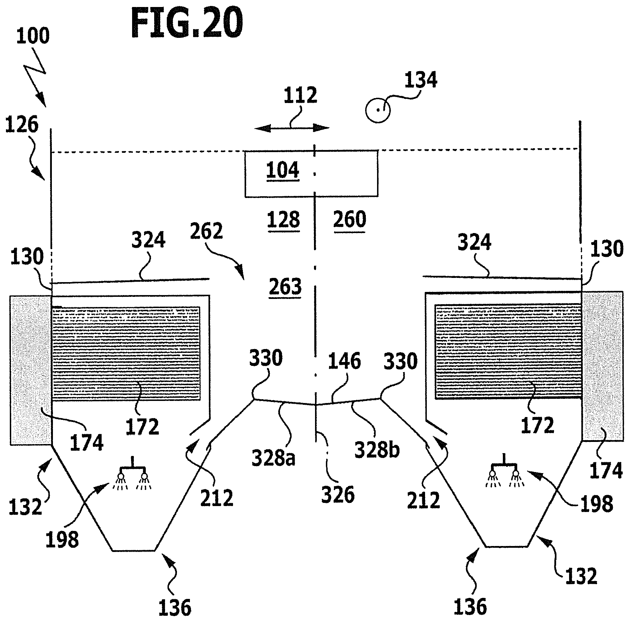

Eine in Fig. 20 in einem schematischen Querschnitt dargestellte zweite Ausführungsform einer Anlage 100 zum Lackieren von Fahrzeugkarosserien 102 unterscheidet sich von der vorstehend beschriebenen ersten Ausführungsform dadurch, dass oberhalb der Filtermodule 132 separate Querluftschleierleitbleche 324 angeordnet sind, welche dazu dienen, die von den Luftschleiererzeugungsvorrichtungen 254 zugeführte Zuluft zu der Engstelle 262 zwischen dem oberen Abschnitt 260 und dem unteren Abschnitt 263 der Strömungskammer 128 hin zu leiten.

Diese Querluftschleierleitbleche 324 sind unter einem Winkel von beispielsweise ungefähr 1° bis ungefähr 3° gegen die Horizontale zu der jeweils benachbarten Seitenwand 130 der Strömungskammer 128 hin geneigt, so dass von oben auf die Querluftschleierleitbleche 324 gelangende Flüssigkeiten nicht zu der Engstelle 262, sondern zu den Seitenwänden 130 hin abfließen.

Auf diese Weise wird gewährleistet, dass beispielsweise aufgrund eines Schlauchplatzers ausströmender Lack aus dem Applikationsbereich 108 oder Löschwasser nicht in den unteren Abschnitt 263 der Strömungskammer 128 und von dort in die Filtermodule 132 gelangen, sondern vielmehr an den Seiten der Strömungskammer 128 abfließen können.

Ferner ist bei dieser Ausführungsform der begehbare Steg 146 zwischen den Modulreihen 136 in zwei im wesentlichen spiegelsymmetrisch zu einer vertikalen Längsmittelebene 326 der Strömungskammer 128 ausgebildete Hälften 328a, 328b unterteilt, welche jeweils unter einem Winkel von beispielsweise ungefähr 1° bis beispielsweise ungefähr 3° gegenüber der Horizontalen zu der Längsmittelebene 326 hin geneigt sind, so dass von oben auf den begehbaren Steg 146 gelangende Flüssigkeiten, wie beispielsweise Lack oder Löschwasser, nicht über die seitlichen Ränder 330 des begehbaren Stegs 146 hinweg zu den Einlassöffnungen 212 der Filtermodule 132 gelangen, sondern in der Mitte des begehbaren Stegs 146 zurückgehalten werden.

Sowohl der begehbare Steg 146 als auch die Querluftschleierleitbleche 324 können zusätzlich in der Längsrichtung 134 der Strömungskammer 128 gegen die Horizontale geneigt sein, so dass die auf diesen Elementen befindlichen Flüssigkeiten aufgrund der Schwerkraftwirkung zu einer Abflussöffnung abfließen können.

Im übrigen stimmt die in Fig. 20 dargestellte zweite Ausführungsform einer Anlage 100 zum Lackieren von Fahrzeugkarosserien 102 hinsichtlich Aufbau und Funktion mit der in den Fig. 1 bis 19 dargestellten ersten Ausführungsform überein, auf deren vorstehende Beschreibung insoweit Bezug genommen wird.

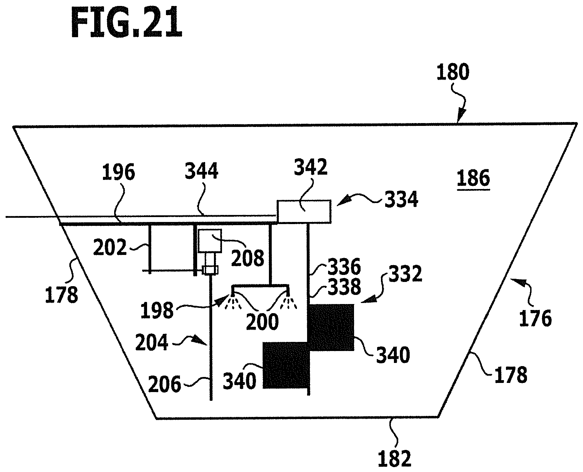

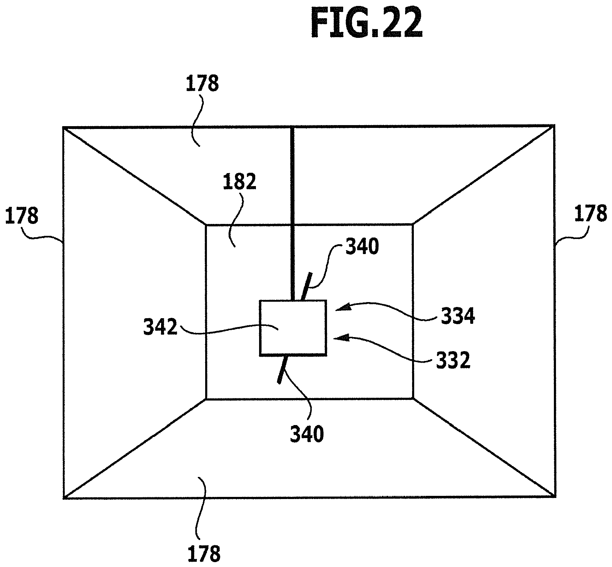

Die Hilfsmaterialaufnahmebehälter 176 der Filtermodule 132 der vorstehend beschriebenen Anlagen 100 zum Lackieren von Fahrzeugkarosserien 102 können alternativ oder ergänzend zu dem in Fig. 13 dargestellten Fluidboden 184 auch andere Einrichtungen 332 zum Durchmischen des im Hilfsmaterialaufnahmebehälter 176 befindlichen Materials aufweisen, beispielsweise ein in den Fig. 21 und 22 schematisch dargestelltes pneumatisch betriebenes Rührwerk 334.

Das pneumatisch betriebene Rührwerk 334 umfasst einen Rührer 336 mit mindestens zwei drehfest an einer im wesentlichen vertikal ausgerichteten Rührwelle 338 angeordneten Rührwerkpaddeln 340 und eine in den Fig. 21 und 22 rein schematisch dargestellte Rührwerkturbine 342, mittels welcher die Rührwelle 338 zu einer Drehbewegung um ihre vertikale Achse antreibbar ist.

Die Rührwerkpaddel 340 sind in einem Winkelabstand von beispielsweise ungefähr 180° und in der Axialrichtung der Rührwelle 338 gegeneinander versetzt an der Rührwelle 338 angeordnet.

Der Rührwerkturbine 342 ist Druckluft über eine Druckluftzuführleitung 344 zuführbar.

Wird der Rührwerkturbine 342 über die Druckluftzuführleitung 344 Druckluft zugeführt, so versetzt die zugeführte Druckluft die Rührwerkturbine 342 in eine Drehbewegung um deren vertikale Achse, worauf sich die drehfest mit der Rührwerkturbine 342 verbundene Rührwelle 338 ebenfalls in Bewegung setzt.

Dabei wird das im Hilfsmaterialaufnahmebehälter 176 befindliche Material durch die sich drehenden Rührwerkpaddel 340 durchmischt, und die Oberfläche des im Hilfsmaterialaufnahmebehälter 176 befindlichen Materials wird geglättet. Im Hilfsmaterialaufnahmebehälter 176 durch Unterhöhlung gebildete Materialbrücken werden aufgebrochen.

Auf diese Weise wird eine gute Durchmischung des Materials im Hilfsmaterialaufnahmebehälter 176 und eine Vergleichmäßigung des Füllstands des Materials innerhalb des Hilfsmaterialaufnahmebehälters 176 erzielt.

Durch den pneumatischen Antrieb des Rührwerks 334 wird eine Funkenbildung innerhalb des Hilfsmaterialaufnahmebehälters 176 vermieden und ein ausreichender Explosionsschutz gewährleistet.

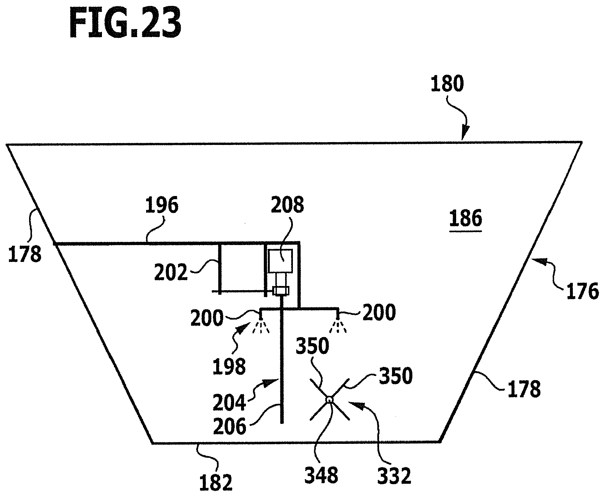

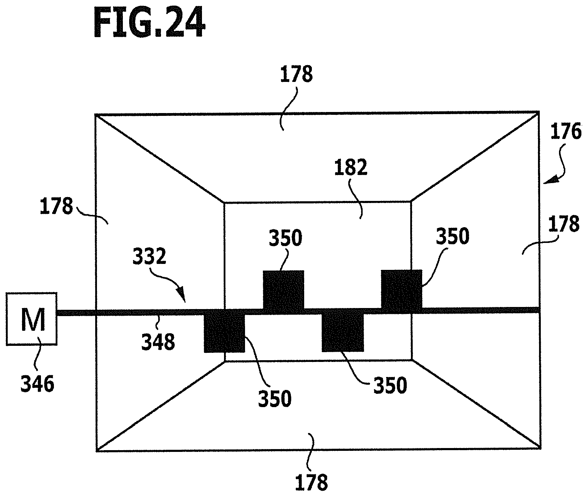

Eine in den Fig. 23 und 24 dargestellte alternative Ausführungsform einer Einrichtung 332 zum Durchmischen des im Hilfsmaterialaufnahmebehälter 176 befindlichen Materials umfasst einen Elektromotor 346, der seitlich neben dem Hilfsmaterialaufnahmebehälter 176 angeordnet ist und dessen Abtriebswelle 348 durch eine Seitenwand 178 des Hilfsmaterialaufnahmebehälters 176 hindurchgeführt und mit mehreren, beispielsweise vier, Paddeln 350 versehen ist, die drehfest und in einem Winkelabstand von beispielsweise jeweils ungefähr 90° sowie in der Axialrichtung der Abtriebswelle 348 gegeneinander versetzt an der Abtriebswelle 348 angeordnet sind.

Durch Drehen der Abtriebswelle 348 mittels des Elektromotors 346 um deren im wesentlichen horizontal ausgerichtete Achse werden die Paddel 350 in Drehbewegung versetzt, wodurch die Paddel 350 das im Hilfsmaterialaufnahmebehälter 176 befindliche Material durchmischen und dessen Oberfläche glätten sowie im Hilfsmaterialaufnahmebehälter 176 entstandene Materialbrücken aufbrechen.

Der Umbau einer bereits bestehenden Vorrichtung 126 zum Abtrennen von Nasslack-Overspray aus einem Overspray-Partikel enthaltenden Rohgasstrom kann unter Verwendung der Filtermodule 132 der vorstehend beschriebenen Anlagen 100 in folgender Weise erfolgen:
Zunächst wird ein Teil der bestehenden Vorrichtung abgebaut, so dass der von einem Filtermodul 132 in seiner Arbeitsposition beanspruchte Raum freigegeben wird.

Anschließend wird ein Filtermodul 132 in der auf diese Weise freigegebenen Arbeitsposition angeordnet und mit der Tragekonstruktion für den Applikationsbereich 108, insbesondere mit den Kabinenwänden 114 der Lackierkabine 110, verbunden.

Anschließend werden diese Schritte wiederholt, bis alle Filtermodule 132 in ihrer Arbeitsposition angeordnet und mit der Tragekonstruktion für den Applikationsbereich 108 verbunden sind.

Auf diese Weise kann beispielsweise eine bestehende Vorrichtung zum nassen Abtrennen von Nasslack-Overspray durch die vorstehend beschriebene, modular aufgebaute Vorrichtung 126 zum trockenen Abtrennen von Nasslack-Overspray ersetzt werden, ohne dass es hierfür erforderlich ist, den Applikationsbereich 108 der Anlage 100 zum Lackieren von Fahrzeugkarosserien 102 zu demontieren.

Besondere Ausführungsformen der vorliegenden Erfindung sind die folgenden:
1. Filtervorrichtung zum Abtrennen von Nasslack-Overspray aus einem Overspray-Partikel enthaltenden Rohgasstrom (120), umfassend mindestens ein Filterelement (172) zum Abtrennen des Oversprays aus dem Rohgasstrom (120) und
   mindestens einen Hilfsmaterialaufnahmebehälter (176) zum Aufnehmen eines Filterhilfsmaterials,
   **dadurch gekennzeichnet**,
   dass die Filtervorrichtung (132) mindestens eine Einlassöffnung (212) umfasst, durch welche der Rohgasstrom (120) in den Hilfsmaterialaufnahmebehälter (176) gerichtet in die Filtervorrichtung (132) eintritt.
2. Filtervorrichtung nach Ausführungsform 1, dadurch gekennzeichnet, dass die Einlassöffnung (212) als ein Einlasskanal (214) ausgebildet ist.
3. Filtervorrichtung nach Ausführungsform 2, dadurch gekennzeichnet, dass der Einlasskanal (214) einen sich in der Strömungsrichtung des Rohgasstroms (120) bis zu einer Engstelle (240) hin verengenden durchströmbaren Querschnitt aufweist.
4. Filtervorrichtung nach einer der Ausführungsformen 2 oder 3, dadurch gekennzeichnet, dass der Einlasskanal (214) einen sich in der Strömungsrichtung des Rohgasstroms (120) von einer Engstelle (240) aus erweiternden durchströmbaren Querschnitt aufweist.
5. Filtervorrichtung nach einer der Ausführungsformen 1 bis 4, dadurch gekennzeichnet, dass die Einlassöffnung (212) nach unten durch eine untere Leitfläche (224) begrenzt ist.
6. Filtervorrichtung nach Ausführungsform 5, dadurch gekennzeichnet, dass die untere Leitfläche (224) zumindest abschnittsweise gegen die Horizontale geneigt ist.
7. Filtervorrichtung nach Ausführungsform 6, dadurch gekennzeichnet, dass die untere Leitfläche (224) zumindest abschnittsweise unter einem Winkel von mindestens ungefähr 30° gegen die Horizontale geneigt ist.
8. Filtervorrichtung nach einer der Ausführungsformen 6 oder 7, dadurch gekennzeichnet, dass die untere Leitfläche (224) zumindest abschnittsweise unter einem Winkel von höchstens ungefähr 75° gegen die Horizontale geneigt ist.
9. Filtervorrichtung nach einer der Ausführungsformen 6 bis 8, dadurch gekennzeichnet, dass die untere Leitfläche (224) einen oberen Abschnitt (226) und einen in der Strömungsrichtung des Rohgasstroms (120) auf den oberen Abschnitt (226) folgenden unteren Abschnitt (228) aufweist, wobei der untere Abschnitt (228) stärker gegenüber der Horizontalen geneigt ist als der obere Abschnitt (226).
10. Filtervorrichtung nach einer der Ausführungsformen 1 bis 9, dadurch gekennzeichnet, dass die Einlassöffnung (212) nach oben durch eine obere Leitfläche (232) begrenzt ist.
11. Filtervorrichtung nach Ausführungsform 10, dadurch gekennzeichnet, dass die obere Leitfläche (232) zumindest abschnittsweise gegen die Horizontale geneigt ist.
12. Filtervorrichtung nach Ausführungsform 11, dadurch gekennzeichnet, dass die obere Leitfläche (232) zumindest abschnittsweise unter einem Winkel von mindestens ungefähr 30° gegen die Horizontale geneigt ist.
13. Filtervorrichtung nach einer der Ausführungsformen 11 oder 12, dadurch gekennzeichnet, dass die obere Leitfläche (232) zumindest abschnittsweise unter einem Winkel von höchstens ungefähr 75° gegen die Horizontale geneigt ist.
14. Filtervorrichtung nach einer der Ausführungsformen 1 bis 13, dadurch gekennzeichnet, dass die mittlere Strömungsgeschwindigkeit des Rohgasstroms (120) beim Passieren der engsten Stelle (240) der Einlassöffnung (212) mindestens ungefähr 2 m/s beträgt.
15. Filtervorrichtung nach einer der Ausführungsformen 1 bis 14, dadurch gekennzeichnet, dass die Einlassöffnung (212) so ausgebildet ist, dass die Strömung des Rohgases (120) im Bereich der Einlassöffnung (212) nicht abreißt.
16. Filtervorrichtung nach einer der Ausführungsformen 1 bis 15, dadurch gekennzeichnet, dass der Hilfsmaterialaufnahmebehälter (176) so ausgebildet und relativ zu der Einlassöffnung (212) angeordnet ist, dass der aus der Einlassöffnung (212) austretende Rohgasstrom (120) in dem Hilfsmaterialaufnahmebehälter (176) zu dem mindestens einen Filterelement (172) hin umgelenkt wird.
17. Filtervorrichtung nach einer der Ausführungsformen 1 bis 16, dadurch gekennzeichnet, dass die Filtervorrichtung (132) mindestens ein Rückhalteelement (222) umfasst, welches Hilfsmaterial aus dem Hilfsmaterialaufnahmebehälter (176) von der Einlassöffnung (212) fernhält.
18. Filtervorrichtung nach Ausführungsform 17, dadurch gekennzeichnet, dass das Rückhalteelement (222) in einen Innenraum der Filtervorrichtung hineinragt.
19. Filtervorrichtung nach einer der Ausführungsformen 17 oder 18, dadurch gekennzeichnet, dass das Rückhalteelement (222) eine untere Begrenzung der Einlassöffnung (212) bildet.
20. Filtervorrichtung nach Ausführungsform 19, dadurch gekennzeichnet, dass das Rückhalteelement (222) einen Abschnitt (228) einer Leitfläche (224) für den Rohgasstrom (120) aufweist, welche stärker gegenüber der Horizontalen geneigt ist als ein in der Strömungsrichtung des Rohgasstroms (120) vor dem an dem Rückhalteelement (222) angeordneten Abschnitt (228) der Leitfläche (224) angeordneter weiterer Abschnitt (226) der Leitfläche (224).
21. Filtervorrichtung nach einer der Ausführungsformen 1 bis 20, dadurch gekennzeichnet, dass die Filtervorrichtung (132) mindestens ein Filterabschirmelement (234) umfasst, welches so ausgebildet und angeordnet ist, dass es verhindert, dass das in die Filtervorrichtung (132) eintretende Rohgas (120) von der Einlassöffnung (212) direkt zu dem mindestens einen Filterelement (172) strömt.
22. Filtervorrichtung nach einer der Ausführungsformen 1 bis 21, dadurch gekennzeichnet, dass die Filtervorrichtung (132) mindestens ein Abweiselement (236) umfasst, welches von dem mindestens einen Filterelement (172) abgereinigtes Material von der Einlassöffnung (212) des Rohgases (120) fernhält.
23. Filtervorrichtung nach Ausführungsform 22, dadurch gekennzeichnet, dass das mindestens eine Abweiselement (236) das von dem mindestens einen Filterelement (172) abgereinigte Material in den Hilfsmaterialaufnahmebehälter (176) lenkt.
24. Filtervorrichtung nach einer der Ausführungsformen 1 bis 23, dadurch gekennzeichnet, dass die Filtervorrichtung (132) mindestens ein Abdeckelement (238) umfasst, das einen Eckbereich der Einlassöffnung (212) abdeckt, so dass Hilfsmaterial und/oder Overspray von dem Eckbereich der Einlassöffnung (212) ferngehalten wird.
25. Filtervorrichtung nach Ausführungsform 24, dadurch gekennzeichnet, dass das Abdeckelement (238) eine im wesentlichen dreieckige Abdeckfläche aufweist.
26. Filtervorrichtung nach einer der Ausführungsformen 1 bis 25, dadurch gekennzeichnet, dass die Einlassöffnung (212) an mindestens einem Eckbereich eine Eckfläche aufweist, welche schräg zur Vertikalen und schräg zur Horizontalen ausgerichtet ist.
27. Filtervorrichtung nach einer der Ausführungsformen 1 bis 26, dadurch gekennzeichnet, dass die Filtervorrichtung (132) mindestens eine Aufwirbelungseinrichtung (198) zum Aufwirbeln von in dem Hilfsmaterialaufnahmebehälter (176) befindlichem Hilfsmaterial umfasst.
28. Vorrichtung zum Abtrennen von Nasslack-Overspray aus einem Overspray-Partikel enthaltenden Rohgasstrom (120), umfassend mindestens eine Filtervorrichtung (132) nach einer der Ausführungsformen 1 bis 27 und eine Strömungskammer (128), durch welche der Rohgasstrom (120) von einem Applikationsbereich (108) einer Lackieranlage (100) zu der Einlassöffnung (212) der mindestens einen Filtervorrichtung (132) strömt.
29. Vorrichtung nach Ausführungsform 28, dadurch gekennzeichnet, dass der von dem Rohgasstrom (120) durchströmbare Querschnitt der Strömungskammer (128) längs der Strömungsrichtung des Rohgasstroms (120) bis zu der mindestens einen Einlassöffnung (212) abnimmt.
30. Vorrichtung nach einer der Ausführungsformen 28 oder 29, dadurch gekennzeichnet, dass die Strömungskammer (128) durch mindestens eine im wesentlichen horizontale Begrenzungswand (164) begrenzt ist, durch welche der von dem Rohgasstrom (120) durchströmbare Querschnitt der Strömungskammer (128) sprunghaft abnimmt.
31. Vorrichtung nach einer der Ausführungsformen 28 bis 30, dadurch gekennzeichnet, dass die Vorrichtung (126) mindestens ein Strömungsleitblech (324) umfasst, das über mindestens einer Filtervorrichtung (132) angeordnet ist und so unter einem Winkel von höchstens ungefähr 10° gegen die Horizontale geneigt ist, dass auf das Strömungsleitblech (324) gelangende Flüssigkeit nicht in den Strömungsweg des Rohgasstroms (120) gelangt.
32. Vorrichtung nach einer der Ausführungsformen 28 bis 31, dadurch gekennzeichnet, dass die Vorrichtung (126) mindestens einen begehbaren Steg (146) umfasst, dessen Oberseite zumindest abschnittsweise so unter einem Winkel von höchstens ungefähr 10° gegen die Horizontale geneigt ist, dass auf den begehbaren Steg (146) gelangende Flüssigkeit nicht in den Strömungsweg des Rohgasstroms (120) gelangt.
33. Anlage zum Lackieren von Gegenständen, insbesondere von Fahrzeugkarosserien (102), umfassend mindestens einen Applikationsbereich (108) zum Applizieren von Nasslack auf die zu lackierenden Gegenstände und mindestens eine Vorrichtung (126) zum Abtrennen von Nasslack-Overspray nach einer der Ausführungsformen 28 bis 32.
34. Anlage nach Ausführungsform 33, dadurch gekennzeichnet, dass der vertikale Abstand des Applikationsbereichs (108) von der Einlassöffnung (212) der Filtervorrichtung (132) mindestens ungefähr 1,0 m beträgt.
35. Verfahren zum Abtrennen von Nasslack-Overspray aus einem Overspray-Partikel enthaltenden Rohgasstrom, umfassend folgende Verfahrensschritte:
   - Einleiten des Rohgasstroms (120) in eine Filtervorrichtung (132); und
   - Abtrennen des Oversprays aus dem Rohgasstrom (120) mittels mindestens eines in der Filtervorrichtung (132) angeordneten Filterelements (172),
   dadurch gekennzeichnet, dass der Rohgasstrom (120) so durch mindestens eine Einlassöffnung (212) in die Filtervorrichtung (132) eingeleitet wird, dass der Rohgasstrom (120) in einen Hilfsmaterialaufnahmebehälter (176) zum Aufnehmen eines Filterhilfsmaterials gerichtet in die Filtervorrichtung (132) eintritt.
36. Verfahren nach Ausführungsform 35, dadurch gekennzeichnet, dass die mittlere Strömungsgeschwindigkeit des Rohgasstroms (120) beim Passieren der engsten Stelle (240) der Einlassöffnung (212) mindestens ungefähr 2 m/s beträgt.
37. Verfahren nach einer der Ausführungsformen 35 oder 36, dadurch gekennzeichnet, dass der Rohgasstrom (120) so in die Filtervorrichtung (132) eingeleitet wird, dass die Strömung des Rohgases im Bereich der Einlassöffnung (212) nicht abreißt.
38. Verfahren nach einer der Ausführungsformen 35 bis 37, dadurch gekennzeichnet, dass der aus der Einlassöffnung (212) austretende Rohgasstrom (120) in dem Hilfsmaterialaufnahmebehälter (176) zu dem mindestens einen Filterelement (172) hin umgelenkt wird.
39. Verfahren nach einer der Ausführungsformen 35 bis 38, dadurch gekennzeichnet, dass in dem Hilfsmaterialaufnahmebehälter(176) befindliches Hilfsmaterial mittels mindestens einer Aufwirbelungseinrichtung (198) aufgewirbelt wird.
40. Verfahren nach einer der Ausführungsformen 35 bis 39, dadurch gekennzeichnet, dass der Rohgasstrom (120) durch eine Strömungskammer (128) von einem Applikationsbereich (108) zum Applizieren des Nasslacks auf zu lackierende Gegenstände bis zu der mindestens einen Einlassöffnung (212) der mindestens einen Filtervorrichtung (132) strömt.
41. Verfahren nach Ausführungsform 40, dadurch gekennzeichnet, dass die Strömungsgeschwindigkeit des Rohgasstroms (120) beim Durchströmen der Strömungskammer (128) kontinuierlich zunimmt.

Weitere besondere Ausführungsformen der vorliegenden Erfindung sind die folgenden:
1. Filtervorrichtung zum Abtrennen von Nasslack-Overspray aus einem Overspray-Partikel enthaltenden Rohgasstrom (120), umfassend mindestens ein Filterelement (172) zum Abtrennen des Oversprays aus dem Rohgasstrom (120) und
   mindestens einen Hilfsmaterialaufnahmebehälter (176) zum Aufnehmen eines Filterhilfsmaterials,
   **dadurch gekennzeichnet,**
   dass die Filtervorrichtung (132) mindestens eine Einlassöffnung (212), durch welche der Rohgasstrom (120) in die Filtervorrichtung (132) eintritt, und mindestens eine Einrichtung (332) zum Durchmischen des im Hilfsmaterialaufnahmebehälter (176) befindlichen Materials umfasst.
2. Filtervorrichtung nach Ausführungsform 1, dadurch gekennzeichnet, dass die Einrichtung (332) zum Durchmischen des im Hilfsmaterialaufnahmebehälter (176) befindlichen Materials ein Rührwerk (334) mit einer Rührwelle (338) und mindestens zwei Rührwerkpaddeln (340) umfasst, wobei das in dem Hilfsmaterialaufnahmebehälter (176) befindliche Material durch die sich drehenden Rührwerkpaddel (340) durchmischt wird, wenn die Rührwelle (338) in eine Drehbewegung versetzt wird.
3. Filtervorrichtung nach Ausführungsform 2, dadurch gekennzeichnet, dass die Rührwelle (338) im Wesentlichen horizontal ausgerichtet ist und durch eine Seitenwand (178) des Hilfsmaterialaufnahmebehälters (176) hindurchgeführt ist.
4. Filtervorrichtung nach einer der Ausführungsformen 2 oder 3, dadurch gekennzeichnet, dass die Einrichtung (332) zum Durchmischen des im Hilfsmaterialaufnahmebehälter (176) befindlichen Materials einen Motor zum Versetzen der Rührwelle (338) in eine Drehbewegung umfasst.
5. Filtervorrichtung nach Ausführungsform 4, dadurch gekennzeichnet, dass der Motor ein Elektromotor (346) oder eine Turbine (342) ist.
6. Vorrichtung zum Abtrennen von Nasslack-Overspray aus einem Overspray-Partikel enthaltenen Rohgasstrom (120), umfassend mindestens eine Filtervorrichtung (132) nach einer der Ausführungsformen 1 bis 5 und eine Strömungskammer (128), durch welche der Rohgasstrom (120) von einem Applikationsbereich (108) einer Lackieranlage (100) zu der Einlassöffnung (212) der mindestens einen Filtervorrichtung (132) strömt.
7. Anlage zum Lackieren von Gegenständen, insbesondere von Fahrzeugkarosserien (102), umfassend mindestens einen Applikationsbereich (108) zum Applizieren von Nasslack auf die zu lackierenden Gegenstände und mindestens eine Vorrichtung (126) zum Abtrennen von Nasslack-Overspray nach Ausführungsform 6.
8. Verfahren zum Abtrennen von Nasslack-Overspray aus einem Overspray-Partikel enthaltenen Rohgasstrom, umfassend folgende Verfahrensschritte:
   - Einleiten des Rohgasstroms (120) in eine Filtervorrichtung (132);
   - Abtrennen des Oversprays aus dem Rohgasstrom (120) mittels mindestens eines in der Filtervorrichtung (132) angeordneten Filterelements;
   - Aufnehmen eines Filterhilfsmaterials in einem Hilfsmaterialaufnahmebehälter (176); und
   - Durchmischen des in dem Hilfsmaterialaufnahmebehälter (176) befindlichen Materials mittels einer Einrichtung (332) zum Durchmischen des in dem Hilfsmaterialaufnahmebehälter (176) befindlichen Materials.
9. Verfahren nach Ausführungsform 8, dadurch gekennzeichnet, dass das in dem Hilfsmaterialaufnahmebehälter (176) befindliche Material durch sich drehende Rührwerkpaddel (340) durchmischt wird, wenn eine Rührwelle (338) der Einrichtung (332) zum Durchmischen des in dem Hilfsmaterialaufnahmebehälter (176) befindlichen Materials in eine Drehbewegung versetzt wird.
10. Verfahren nach Ausführungsform 9, dadurch gekennzeichnet, dass die Rührwelle (338) im Wesentlichen horizontal ausgerichtet ist und durch eine Seitenwand (178) des Hilfsmaterialaufnahmebehälters (176) hindurchgeführt ist.
11. Verfahren nach einer der Ausführungsformen 9 oder 10, dadurch gekennzeichnet, dass die Rührwelle (138) mittels eines Motors in eine Drehbewegung versetzt wird.
12. Verfahren nach Ausführungsform 11, dadurch gekennzeichnet, dass der Motor ein Elektromotor (346) oder eine Turbine (342) ist.

## Patentansprüche

1. Vorrichtung zum Abtrennen von Nasslack-Overspray aus einem Overspray-Partikel enthaltenden Rohgasstrom (120) in einer Beschichtungsanlage, umfassend
mindestens eine Filtervorrichtung (132) zum Abtrennen von Nasslack-Overspray aus dem Overspray-Partikel enthaltenden Rohgasstrom (120), welche mindestens ein Filterelement (172) zum Abtrennen des Oversprays aus dem Rohgasstrom (120) und
mindestens einen Hilfsmaterialaufnahmebehälter (176) zum Aufnehmen eines in dem Hilfsmaterialaufnahmebehälter (176) aufgenommenen Filterhilfsmaterials, das in den Rohgasstrom (120) zugegeben wird, wobei das Filterhilfsmaterial partikelförmig ist, umfasst, und
eine Strömungskammer (128), durch welche der Rohgasstrom (120) von einem Applikationsbereich (108) einer Lackieranlage (100) zu einer Einlassöffnung (212) der mindestens einen Filtervorrichtung (132) strömt, wobei die Filtervorrichtung eine Abpulseinheit (266) zum Erzeugen von Druckluftimpulsen für das Abreinigen von Nasslack-Overspray und Filterhilfsmaterial von dem Filterelement (172) umfasst,
wobei die Abpulseinheit (266) an einem Grundkörper (174) des Filterelements (172) angeordnet ist und dazu in der Lage ist, Druckluftimpulse an Druckluftrohre abzugeben, welche innerhalb des Grundkörpers (174) verlaufen und von der Abpulseinheit (266) in den Innenraum des Filterelements (172) führen,
**dadurch gekennzeichnet,**
**dass** das Filterhilfsmaterial einen Zeolith umfasst,
**dass** die Filtervorrichtung eine Einrichtung zum Absaugen von Material, welches Filterhilfsmaterial zusammen mit Overspray-Partikeln enthält, aus dem Hilfsmaterialaufnahmebehälter (176), zur Aufbereitung dieses Materials und zur zumindest teilweisen Wiederverwendung dieses Materials in der Beschichtungsanlage umfasst und
**dass** die Filtervorrichtung eine Steuervorrichtung (210) zum Sperren der Druckluftzufuhr von einem Kompressor (272) zu den Druckluftverbrauchern der Filtervorrichtung (132) durch Schließen eines Sperrventils (280), wenn die Rohgasströmung durch das Filterelement (172) unterhalb eines vorgegebenen Schwellenwerts liegt, umfasst.

2. Vorrichtung nach Anspruch 1, **dadurch gekennzeichnet, dass** die Steuervorrichtung (210) den Betriebszustand eines Abluftgebläses (252) mittels eines Differenzdruckmessers (282) überwacht.

3. Vorrichtung nach einem der Ansprüche 1 oder 2, **dadurch gekennzeichnet, dass** das Filterhilfsmaterial chemisch mit dem Overspray reagierende Partikel umfasst.

4. Anlage zum Lackieren von Gegenständen, insbesondere von Fahrzeugkarosserien (102), umfassend mindestens einen Applikationsbereich (108) zum Applizieren von Nasslack auf die zu lackierenden Gegenstände und mindestens eine Vorrichtung (126) zum Abtrennen von Nasslack-Overspray nach einem der Ansprüche 1 bis 3.

5. Verfahren zum Abtrennen von Nasslack-Overspray aus einem Overspray-Partikel enthaltenden Rohgasstrom in einer Beschichtungsanlage, umfassend folgende Verfahrensschritte:
- Einleiten des Rohgasstroms (120) in eine Filtervorrichtung (132);
- Abtrennen des Oversprays aus dem Rohgasstrom (120) mittels mindestens eines in der Filtervorrichtung (132) angeordneten Filterelements; und
- Aufnehmen eines Filterhilfsmaterials in einem Hilfsmaterialaufnahmebehälter (176) und Zugeben des Filterhilfsmaterials in den Rohgasstrom (120);
wobei ein partikelförmiges Filterhilfsmaterial verwendet wird,
wobei das Filterhilfsmaterial einen Zeolith umfasst,
wobei aus dem Hilfsmaterialaufnahmebehälter (176) abgesaugtes Material, welches Filterhilfsmaterial zusammen mit Overspray-Partikeln enthält, nach einer Aufbereitung zumindest teilweise in der Beschichtungsanlage wiederverwendet wird,
wobei das Filterelement (172) durch Druckluftimpulse, welche mittels einer Abpulseinheit (266) erzeugt werden, abgereinigt wird,
wobei die Abpulseinheit (266) an einem Grundkörper (174) des Filterelements (172) angeordnet ist und dazu in der Lage ist, Druckluftimpulse an Druckluftrohre abzugeben, welche innerhalb des Grundkörpers (174) verlaufen und von der Abpulseinheit (266) in den Innenraum des Filterelements (172) führen, und
wobei eine Steuervorrichtung (210) die Druckluftzufuhr von einem Kompressor (272) zu den Druckluftverbrauchern der Filtervorrichtung (132) durch Schließen eines Sperrventils (280) sperrt, wenn die Rohgasströmung durch das Filterelement (172) unterhalb eines vorgegebenen Schwellenwerts liegt.

6. Verfahren nach Anspruch 5, **dadurch gekennzeichnet, dass** die Steuervorrichtung (210) ermittelt, ob eine ausreichende Rohgasströmung durch das Filterelement (172) vorhanden ist, indem die Steuervorrichtung (210) den Betriebszustand eines Abluftgebläses (252) mittels eines Differenzdruckmessers (282) überwacht.

7. Verfahren nach einem der Ansprüche 5 oder 6, **dadurch gekennzeichnet, dass** chemisch mit dem Overspray reagierende Partikel als Filterhilfsmaterial verwendet werden.

## Claims

1. Device for separating wet paint overspray from a crude gas stream (120) containing overspray particles in a coating installation, comprising
at least one filter device (132) for separating wet paint overspray from the crude gas stream (120) containing overspray particles, which comprises at least one filter element (172) for separating the overspray from the crude gas stream (120) and
at least one auxiliary material reservoir (176) for accommodating an auxiliary filter material which is accommodated in the auxiliary material reservoir (176) and which is added into the crude gas stream (120), wherein the auxiliary filter material is particulate, and
a flow chamber (128), through which the crude gas stream (120) flows from an application region (108) of a painting installation (100) to an inlet opening (212) of the at least one filter device (132),
wherein the filter device comprises a pulse-producing unit (266) for producing compressed air pulses for cleaning wet paint overspray and auxiliary filter material from the filter element (172),
wherein the pulse-producing unit (266) is arranged on a base body (174) of the filter element (172) and is capable of delivering compressed air pulses to compressed air tubes which run within the base body (174) and lead from the pulse-producing unit (266) into the inner space of the filter element (172),
**characterized in that**
the auxiliary filter material comprises a zeolite,
**in that** the filter device comprises a means for aspirating material, which contains auxiliary filter material together with overspray particles, from the auxiliary material reservoir (176), for processing said material and for at least partially reusing said material in the coating installation, and
**in that** the filter device comprises a control device (210) for blocking the compressed air feed from a compressor (272) to the compressed air consumers of the filter device (132) by closing a blocking valve (280) if the crude gas flow through the filter element (172) is below a given threshold value.

2. Device in accordance with Claim 1, **characterized in that** the control device (210) monitors the operating state of an exhaust air blower (252) by means of a differential pressure meter (282).

3. Device in accordance with either of Claims 1 or 2, **characterized in that** the auxiliary filter material comprises particles which chemically react with the overspray.

4. Installation for painting objects, in particular vehicle bodies (102), comprising at least one application region (108) for applying wet paint to the objects to be painted and at least one device (126) for the separation of wet paint overspray in accordance with any one of Claims 1 to 3.

5. Method for separating wet paint overspray from a crude gas stream containing overspray particles in a coating installation, comprising the following method steps:
- introducing the crude gas stream (120) into a filter device (132);
- separating the overspray from the crude gas stream (120) by means of at least one filter element arranged in the filter device (132); and
- accommodating an auxiliary filter material in an auxiliary material reservoir (176) and adding the auxiliary filter material into the crude gas stream (120);
wherein a particulate auxiliary filter material is used,
wherein the auxiliary filter material comprises a zeolite,
wherein material aspirated from the auxiliary material reservoir (176), which contains auxiliary filter material together with overspray particles, is at least partially reused in the coating installation after being processed,
wherein the filter element (172) is cleaned by compressed air pulses which are produced by means of a pulse-producing unit (266), wherein the pulse-producing unit (266) is arranged on a base body (174) of the filter element (172) and is capable of delivering compressed air pulses to compressed air tubes which run within the base body (174) and lead from the pulse-producing unit (266) into the inner space of the filter element (172), and
wherein a control device (210) blocks the compressed air feed from a compressor (272) to the compressed air consumers of the filter device (132) by closing a blocking valve (280) if the crude gas flow through the filter element (172) is below a given threshold value.

6. Method in accordance with Claim 5, **characterized in that** the control device (210) determines whether a sufficient crude gas flow through the filter element (172) is present, by the control device (210) monitoring the operating state of an exhaust air blower (252) by means of a differential pressure meter (282).

7. Method in accordance with either of Claims 5 or 6, **characterized in that** particles which chemically react with the overspray are used as auxiliary filter material.

## Revendications

1. Dispositif pour la séparation d'un excédent de peinture liquide d'un flux de gaz brut (120) contenant des particules d'excédent dans une installation d'enduction, comportant
au moins un dispositif de filtrage (132) pour séparer l'excédent de peinture liquide d'un flux de gaz brut (120) contenant des particules d'excédent qui comporte au moins un élément de filtre (172) pour séparer l'excédent du flux de gaz brut (120) et
au moins un bac de réception d'adjuvant (176) pour la réception d'un adjuvant de filtrage reçu dans le bac de réception d'adjuvant (176), qui est ajouté dans le flux de gaz brut (120),
dans lequel l'adjuvant de filtrage est sous forme particulaire, et
une chambre d'écoulement (128), par laquelle le flux de gaz brut (120) passe d'une zone d'application (108) d'une installation d'application de peinture (100) à une ouverture d'entrée (212) de l'au moins un dispositif de filtrage (132),
dans lequel le dispositif de filtrage comporte une unité d'émission d'impulsions (266) pour générer des impulsions d'air comprimé pour l'enlèvement de l'excédent de peinture liquide et de l'adjuvant de filtrage de l'élément de filtre (172),
dans lequel l'unité d'émission d'impulsions (266) est agencée sur un corps de base (174) de l'élément de filtre (172) et est capable d'émettre des impulsions d'air comprimé dans des tubes d'air comprimé qui évoluent à l'intérieur du corps de base (174) et conduisent de l'unité d'émission d'impulsions (266) dans l'espace intérieur de l'élément de filtre (172),
**caractérisé en ce que**
l'adjuvant de filtrage comporte une zéolithe,
l'adjuvant de filtrage comporte un système d'aspiration de matériau qui contient l'adjuvant de filtrage conjointement aux particules d'excédent, hors du bac de réception d'adjuvant (176), pour la préparation de ce matériau et pour la réutilisation au moins partielle de ce matériau dans l'installation d'enduction, et
le dispositif de filtrage comporte un dispositif de commande (210) pour bloquer l'acheminement d'air comprimé d'un compresseur (272) aux éléments consommateurs d'air comprimé du dispositif de filtrage (132) en fermant un clapet de retenue (280), lorsque le flux de gaz brut au travers de l'élément de filtre (172) se situe en dessous d'une valeur seuil prédéterminée.

2. Dispositif selon la revendication 1, **caractérisé en ce que** le dispositif de commande (210) surveille l'état de fonctionnement d'une soufflerie d'extraction d'air (252) au moyen d'un manomètre différentiel (282).

3. Dispositif selon l'une quelconque des revendications 1 ou 2, **caractérisé en ce que** l'adjuvant de filtrage comporte des particules réagissant chimiquement avec l'excédent.

4. Installation d'application de peinture d'objets, en particulier de carrosseries de véhicule (102), comportant au moins une zone d'application (108) pour l'application de peinture liquide sur les objets à peindre et au moins un dispositif (126) pour la séparation de l'excédent de peinture liquide selon l'une des revendications 1 à 3.

5. Procédé de séparation de l'excédent de peinture liquide d'un flux de gaz brut contenant des particules d'excédent dans une installation d'enduction, comportant les étapes de procédé suivantes :
- introduction du flux de gaz brut (120) dans un dispositif de filtrage (132) ;
- séparation de l'excédent du flux de gaz brut (120) au moyen de l'au moins un élément de filtre disposé dans le dispositif de filtrage (132) ; et
- réception d'un adjuvant de filtrage dans un bac de réception d'adjuvant (176) et addition de l'adjuvant de filtrage dans le flux de gaz brut (120) ;
dans lequel un adjuvant de filtrage sous forme particulaire est utilisé,
dans lequel l'adjuvant de filtrage comporte une zéolithe,
dans lequel un matériau aspiré du bac de réception d'adjuvant (176), qui contient l'adjuvant de filtrage conjointement aux particules d'excédent, est réutilisé au moins partiellement après une préparation dans l'installation d'enduction,
dans lequel l'élément de filtre (172) est nettoyé par des impulsions d'air comprimé qui sont générées au moyen d'une unité d'émission d'impulsions (266),
dans lequel l'unité d'émission d'impulsions (266) est agencée sur un corps de base (174) de l'élément de filtre (172) et est capable d'émettre des impulsions d'air comprimé dans des tubes d'air comprimé qui évoluent à l'intérieur du corps de base (174) et conduisent de l'unité d'émission d'impulsions (266) dans l'espace intérieur de l'élément de filtre (172), et
dans lequel un dispositif de commande (210) bloque l'acheminement d'air comprimé d'un compresseur (272) aux éléments consommateurs d'air comprimé du dispositif de filtrage (132) en fermant un clapet de retenue (280), lorsque le flux de gaz brut au travers de l'élément de filtre (172) se situe en dessous d'une valeur seuil prédéterminée.

6. Procédé selon la revendication 5, **caractérisé en ce que** le dispositif de commande (210) détermine si un flux de gaz brut suffisant est présent au travers de l'élément de filtre (172), **en ce que** le dispositif de commande (210) surveille l'état de fonctionnement d'une soufflerie d'extraction d'air (252) au moyen d'un manomètre différentiel (282).

7. Procédé selon l'une des revendications 5 ou 6, **caractérisé en ce que** des particules réagissant chimiquement avec l'excédent sont utilisées comme adjuvant de filtrage.
